(19) Europäisches Patentamt European Patent Office Office européen des brevets

(11) **EP 2 792 042 B1**

(12) **EUROPEAN PATENT SPECIFICATION**

(45) Date of publication and mention
of the grant of the patent:
**03.02.2016 Bulletin 2016/05**

(51) Int Cl.:
***H02J 3/38*** (2006.01)        ***H02M 1/42*** (2007.01)

(21) Application number: **11808584.4**

(86) International application number:
**PCT/EP2011/006392**

(22) Date of filing: **16.12.2011**

(87) International publication number:
**WO 2013/087085 (20.06.2013 Gazette 2013/25)**

(54) **METHOD FOR ACTIVE CONTROL OF FREQUENCY AND VOLTAGE IN A POWER SUPPLY GRID WITH DECENTRALIZED POWER SUPPLY SYSTEMS**

VERFAHREN ZUR AKTIVEN STEUERUNG DER FREQUENZ UND SPANNUNG IN EINEM ENERGIEVERSORGUNGSNETZ MIT DEZENTRALISIERTEN STROMVERSORGUNGSSYSTEMEN

PROCÉDÉ DE RÉGULATION ACTIVE DE LA FRÉQUENCE ET DE LA TENSION DANS UN RÉSEAU D'ALIMENTATION EN COURANT AU MOYEN DE SYSTÈMES D'ALIMENTATION EN COURANT DÉCENTRALISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.10.2014 Bulletin 2014/43**

(73) Proprietor: **Fachhochschule Südwestfalen 58644 Iserlohn (DE)**

(72) Inventors:
• **ORTJOHANN, Egon 37671 Höxter (DE)**
• **SINSUKTHAVORN, Worpong 10110 Bangkok Pomprab Satruphai (TH)**
• **SCHMELTER, Andreas 59494 Soest (DE)**
• **HAMSIC, Nedzad 45886 Gelsenkirchen (DE)**

(74) Representative: **Cohausz Hannig Borkowski Wißgott Patent- und Rechtsanwaltskanzlei Schumannstrasse 97-99 40237 Düsseldorf (DE)**

(56) References cited:
**US-A1- 2010 141 030**

• **K. DE BRABANDERE; B. BOLSENS; J. VAN DEN KEYBUS; A. WOYTE; J. DRIESEN; R. BELMANS: "A Voltage and Frequency Droop Control Method for Parallel Inverters", IEEE TRANSACTIONS ON POWER ELECTRONIC, vol. 22, no. 4, 2007, pages 1107-1115, XP11186910, cited in the application**
• **JOSEP M GUERRERO ET AL: "Decentralized Control for Parallel Operation of Distributed Generation Inverters Using Resistive Output Impedance", IEEE TRANSACTIONS ON INDUSTRIAL ELECTRONICS, IEEE SERVICE CENTER, PISCATAWAY, NJ, USA, vol. 54, no. 2, 1 April 2007 (2007-04-01), pages 994-1004, XP011175314, ISSN: 0278-0046, DOI: 10.1109/TIE. 2007.892621**

EP 2 792 042 B1

**Description**

The present invention is in the technical field of electrical power systems. More particularly, the present invention is in the technical field of load sharing control. It relates to a method for actively controlling in a feedback control at least one output parameter of a decentralized power generating unit feeding power into a power supply grid having a plurality of such decentralized power generating units, the power generating unit being coupled to the grid at a grid tied point.

A method of the afore mentioned kind is disclosed in the publication K. De Brabandere; B. Bolsens; J. van den Keybus; A. Woyte; J. Driesen; R. Belmans: "A Voltage and Frequency Droop Control Method for Parallel Inverters", IEEE Transactions on Power Electronic, vol. 22, no. 4, 2007, pages 1107-1115, XP11186910 wherein this document further proposes to take into account the resistance, reactance and impedance of the grid lines.

Distributed Generation (DG) technologies are becoming potential contributors of electricity supplied to electric utilities. Integrating a large number of such Energy Conversion Systems (ECSs) based on Distributed Energy Resources (DERs) and partly on Renewable Energy Sources (RESs) into main grids, automatically leads to generation fluctuation, altered grid infrastructure, change in dynamic behaviors, etc. Since the main grid structure cannot be changed rapidly, the existing control structure based on conventional power systems should be used as a guideline to develop a new grid control for decentralized power supply systems.

However, as the conventional primary control strategy of Power plants in the high voltage transmission networks is based on the inductive nature of power systems, the main issues of medium voltage and low voltage networks, concerning the resistive nature of power systems, are not taken into consideration. Therefore, conventional droop controls that are used in conventional power systems to get a load sharing related to the grid frequency and the voltage will no longer be efficient when applied in medium and low voltage networks.

The present invention is a flexible, adaptable and general droop control for power sharing, which can be implemented into the control of generating units (synchronous machine, inverters, etc.) and can be applied in all voltage levels of power supply systems.

Brief description of the drawings:

Fig. 1: a schematic view of feeding modes related to the grid side of the present invention;
Fig. 2: a schematic view of an inverter in ECS driven feeding mode as flexible primary interface between ECS and grid of the present invention;
Fig. 3: a schematic view of a general control of a system operating in a grid-driven feeding mode inverter (grid forming, grid supporting) of the present invention;
Fig. 4: a schematic view of a general control of a system operating in an ECS-driven feeding mode inverter (grid parallel) of the present invention;
Fig. 5: a schematic view of the general view of inverter connected to the grid (gate impedance) of the present invention;
Fig. 6: a schematic view of innovative control of a system operating in a grid-driven feeding mode inverter (forming, supporting) based on AGIDC and grid impedance measurement method of the present invention;
Fig. 7: a schematic view of innovative control of a system operating in an ECS-driven feeding mode inverter (parallel) based on AGIDC and grid impedance measurement method of the present invention;
Fig. 8: a schematic view of active and reactive power at bus-*i* in power flow study of the present invention;
Fig. 9: a schematic view of conventional droop functions (a) frequency/active power and (b) voltage/reactive power of the present invention;
Fig. 10: a schematic view of rotational in coordinate systems of the present invention;
Fig. 11: a schematic view of rotational in coordinate systems with pointed out trigonometry explanation for *P*'variable of the present invention;
Fig. 12: a schematic view of rotational in coordinate systems with pointed out trigonometry explanation for *Q*'variable of the present invention;
Fig. 13: a schematic view of movement of impedance *Z* related to the rotating angle $\varphi$ of the present invention;
Fig. 14: a schematic view of new droop control diagram for grid forming mode of the present invention;
Fig. 15: a schematic view of a general control of a system operating in a grid-driven feeding mode inverter *i* (grid forming) with new droop control of the present invention;
Fig. 16: a schematic view of a general control of a system operating in a grid-driven feeding mode synchronous generator *i* (grid forming) with new droop control of the present invention;
Fig. 17: a schematic view of conventional droop functions (a) active power/frequency and (b) reactive power/voltage of the present invention;
Fig. 18: a schematic view of rotational in coordinate systems of the present invention;

Fig. 19: a schematic view of rotational in coordinate systems with pointed out trigonometry explanation for δ' variable of the present invention;

Fig. 20: a schematic view of rotational in coordinate systems with pointed out trigonometry explanation for *V* variable of the present invention;

Fig. 21: a schematic view of new droop control diagram for grid supporting mode of the present invention;

Fig. 22: a schematic view of a general control of a system operating in a grid-driven feeding mode inverter *i* (grid supporting) with new droop control of the present invention;

Fig. 23: a schematic view of a general control of a system operating in a grid-driven feeding mode synchronous generator *i* (grid supporting) with new droop control of the present invention;

Fig. 24: a schematic view of a general control of a system operating in an ECS-driven feeding mode inverter *i* (grid parallel) with new droop control of the present invention;

Fig. 25: a schematic view of new droop control diagram for grid forming mode with additional selective functions of the present invention;

Fig. 26: a schematic view of new droop control diagram for grid supporting and grid parallel mode with additional selective functions of the present invention;

Detailed description of the invention:

The fundamental architecture of centralized power supply systems is characterized by unidirectional power flow from centralized power plants, located at extra high voltage (EHV) and high voltage (HV) levels of the transmission networks, down to distributed consumers located at medium voltage (MV) and low voltage (LV) levels of the distribution networks. The control and stabilization of state variables (frequency and voltage) is done by large power plants, which means that the grid can only actively control and respond to disturbances by continuously balancing the output of power plants located at EHV and HV levels. In contrast, MV and LV levels are in the traditional layout passively controlled. Customer demand is more or less not controllable, and the grid can only react passively to the changes in demand through centralized control. The operation of centralized power systems is limited by basic network components (i.e. lines, transformers, switches, switchable capacitors). This means that the dispatching of power and network control is typically the responsibility by the power plants and the centralized control units respectively the dispatch centers.

As the old centralized power supply systems are changing, the trend of future power supply systems will move toward decentralized power supply systems in combination with renewable energy resources (RESs). The power system penetration of distributed generation (DG) and distributed energy resources (DERs) in combination with RESs is expected to play a key role in future power systems and furthermore in Smart Grids. Especially DERs, which are mainly used for medium and small energy conversion systems (ECSs) in MV and LV networks, will be a main focus in decentralized power supply systems. These decentralized systems can be recognized by their bidirectional power flow, which means that the power flow can range from lower to higher voltage levels.

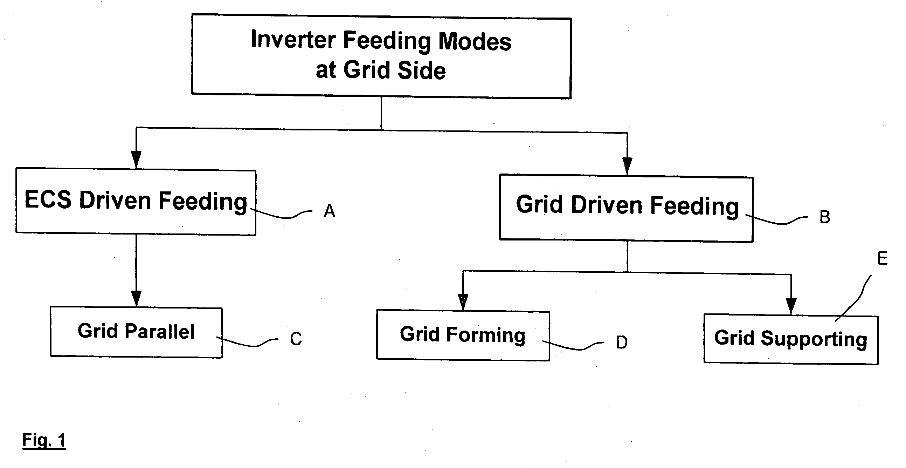

According to the future requirements of power supply systems, DERs based DG should be actively integrated into the active grid control to maintain the state variables frequency and voltage of the grid. To get a general strategy for the dynamic control of DGs, the requirements of the physical behavior in power supply systems have to be taken into consideration for the established control functionality of conventional grids. This means control functionality for the DGs is needed to bring together the decentralized and centralized generators in compatible coexistence. In order to fulfill these requirements of future decentralized power supply systems, the power electronics devices, like inverters, can be used as intelligent and multi-functional primary interfaces between ECS and grids. The general categorization of inverter topologies concerning their operation mode is shown in Fig. 1.

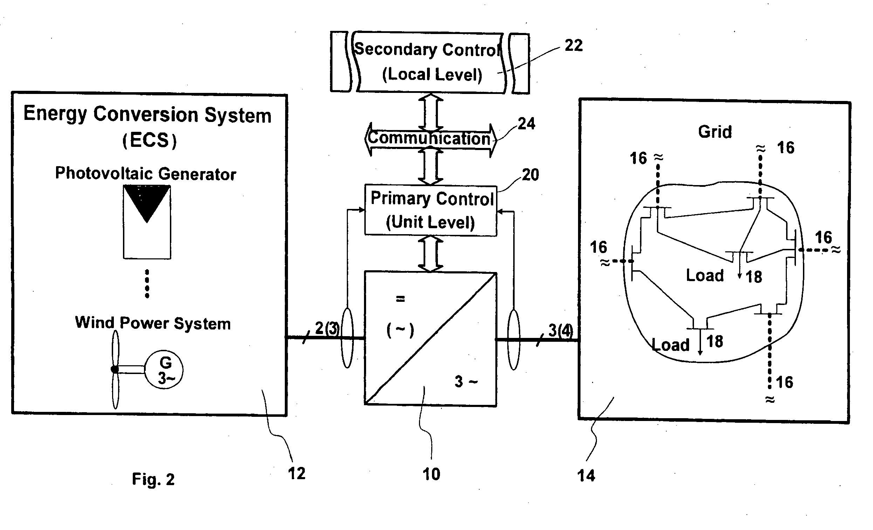

Feeding modes of the inverter can be separated into two types as depicted in Figure 1 which are inverter of ECS driven feeding mode A and inverter of grid driven feeding mode B, see the disclosure in publication "Advanced Control Strategy for Three-Phase Grid Inverters with Unbalanced Loads for PV/Hybrid Power Systems" by E. Ortjohann, A. Mohd, N. Hamsic, D. Morton, O. Omari, presented at 21th European PV Solar Energy Conference, Dresden, 2006. An inverter of ECS driven feeding mode A may be realized through a grid parallel inverter C. In this context, the ECS has to be interpreted in an expanded way. This means all opportunities in the use of an inverter as a grid tied interface. As shown in Fig. 2, the inverter 10 provides decoupling between the voltages across the terminals of the ECS 12 from one side and the grid voltage of grid 14 from the other side. It also provides a decoupling between the frequency of the ECS 12 from one side and the grid frequency from the other side.

In Fig. 2 it is depicted exemplary that the ECS 12 may be a photovoltaic generator providing a DC voltage to the inverter 10 via two lines. In an alternative, it may be a wind power system with a three phase synchronous generator G providing three phase AC voltage via three lines to the inverter 10. The inverter 10 provides three phase AC voltage to the grid 14 via a connection of three lines to the grid or four lines considering earth as well. The grid 14 is schematically depicted in Fig. 2 having five decentral power feeding tied points 16 and two points 18 to which a power consuming load is connected. The inverter 10 is controlled by a primary control 20 being implemented into the inverter 10 itself on the basis of the electrical parameters on the input and output side of the inverter 10, and by a secondary control 22 on a local level. Primary control 20 and secondary control 22 are interconnected via a communication link 24.

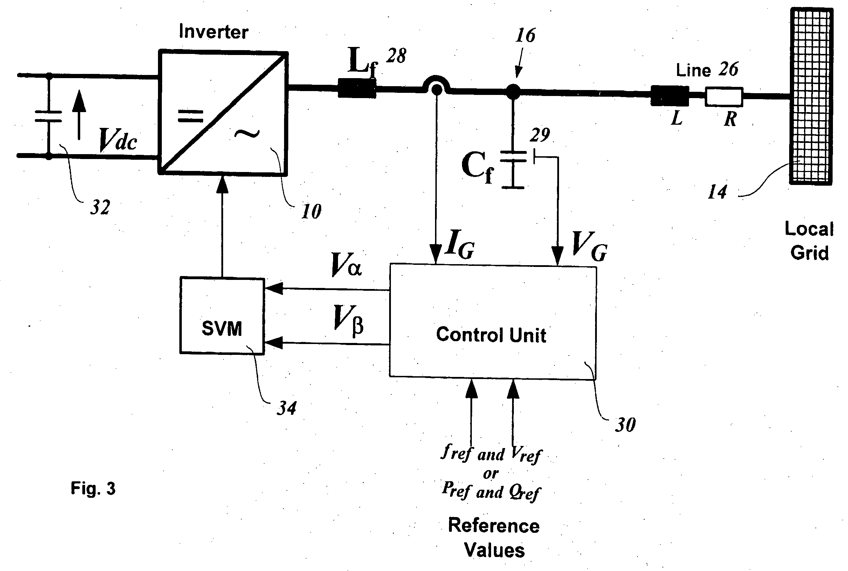

An inverter in grid-driven feeding mode B can be realized through two different cases, which are grid forming D and grid supporting modes E. An inverter in a grid-forming mode D is responsible for establishing the voltage and the grid frequency as state variables and maintaining them, see publication "Conceptual Development of a General Supply Philosophy for Isolated Electrical Power Systems" by O. Omari, vol. PhD. Soest, Germany: South Westphalia University of Applied Sciences, 2005. This is done by increasing or decreasing its power production in order to keep the power balance in the electrical system. An inverter in a grid-supporting mode E feeds predefined amounts of power which are normally specified by a management unit, for example, a load dispatch center. Therefore, the power production in such a case is not a function of the power imbalances in the grid. Nevertheless, the predefined amounts of power for these units may be adjusted. The management system may change the reference values according to the system's requirements and the units' own qualifications, see A. Mohd: "Development of Modular Grid Architecture for Decentralized Generators in Electrical Power Supply System with Flexible Power Electronics", Dissertation, Joint-PhD Program between The University of Bolton, Bolton, UK, in cooperation with South Westphalia University of Applied Sciences - Soest, Soest, Germany, January 2010. The general control strategy of a grid-driven feeding mode inverter B can be described in Fig. 3. In addition, this kind of definition is general, which can also be expandable to synchronous generators for the control side.

Fig. 3 shows an inverter 10 in a grid driven feeding mode feeding power from a DC link 32 into a grid 14 to which the inverter 10 is connected via line 26 generally represented as RL-combination. The control is based on the voltage $V_G$ and the current $I_G$ measured at the tied point 16 which are provided to a control unit 30. Reference values are provided to the control unit 30 as well, in case of grid forming mode the grid voltage $V_{ref}$ and the grid frequency $f_{ref}$ and in case of grid supporting mode the active power $P_{ref}$ and the reactive power $Q_{ref}$. The control unit 30 calculates a set voltage in $\alpha$ and $\beta$ coordinates as input variables for a state variable model controlling the power electronic switches of the inverter 10 in order to obtain the specified set voltage at the output terminals of the inverter 10. From the grid's point of view the generating unit 10, 32 is represented at the tied point 16 having a capacitance 29 to earth and inductivity 28. Schematically, the voltage $V_G$ is measured at this capacitance 29 and the current $I_G$ is measured at this inductivity 28.

An electrical system must include grid-driven feeding units (inverters, synchronous generators) to maintain its power balance and the power sharing of the units. If an electrical system has one grid-driven feeding unit only, then it should be the grid-forming unit as described in O. Omari "Conceptual Development of a General Supply Philosophy for Isolated Electrical Power Systems". If there is more than one grid-driven feeding point in an electrical system, one of them, at least, takes the responsibility of forming the grid state-variables frequency and voltage (D) and the others function as grid-supporting units (E).

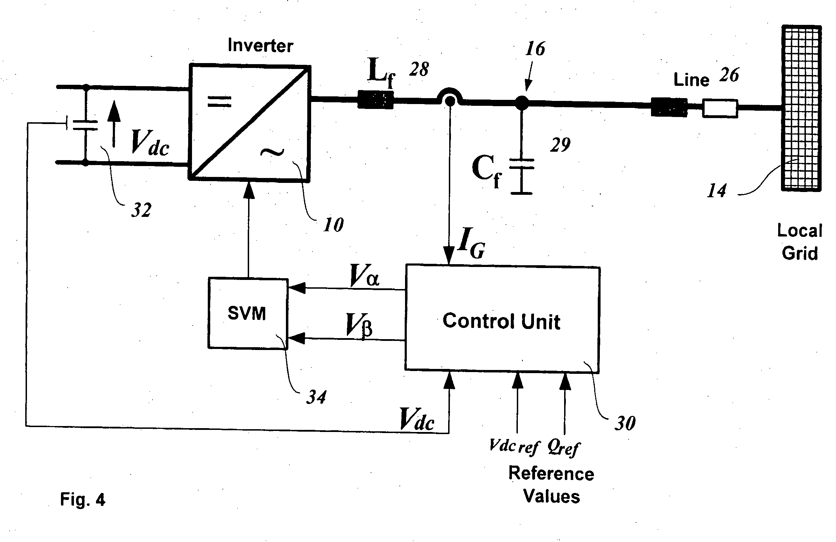

An inverter in ECS-driven feeding mode A is a grid parallel mode C which is a power production unit. It is not controlled according to the requirements of the electrical system. RESs such as wind energy converters and photovoltaic systems (see Fig 2) may be used as ECSs 12 to feed their maximum power into the grid 14 (standard applications in conventional grids). The general control strategy of ECS-driven feeding mode inverters 10 can be described in Fig. 4. In addition, this kind of definition is general, which can also be expandable to synchronous generators for the control side.

Fig. 4 shows the same basic electric structure as Fig. 3 but for an inverter 10 in grid parallel mode. The control of the inverter 10 differs from the control in Fig. 3 in that instead of the output inverter voltage $V_G$ the DC-link 32 voltage $V_{dc}$, the reference value $Vdc_{ref}$ for the DC-link 32 and the reactive power reference value $Q_{ref}$ is provided to the control unit 30 and used to calculate the $\alpha$ and $\beta$ coordinates of the set voltage.

Since the control topologies and infrastructure of existing power systems cannot be rapidly changed, the design and development of new systems related to maintenance, operation, security, protection and efficiency must follow the Union for the Coordination of the Transmission of Electricity (UCTE) handbook, Grid Code regulations (UCTE: "Operation Handbook - Introduction", Final v2.5 E, 24.06.2004, July 2004; and UCTE: "Operational Handbook - Policy 1: Load-Frequency Control", Final Version (approved by SC on 19 March 2009), March 2009), which are applied in transmission systems. New control strategies and concepts for the grid integration should be based on conventional power systems. Moreover, to get load sharing to the power generators related to the active and reactive power in combination to the state variables, the droop control functions, introduced in the German Patent Application DE 101 40 783 A 1, are used in conventional power supply systems. This load sharing strategy is mainly implemented in the EHV and HV levels in the grid. This load sharing strategy is mainly orientated to transmission network behavior and it is based on the inductive nature of power systems.

Therefore, conventional droop functions in DE 101 40 783 A 1 that are used in conventional power systems cannot be used efficiently when applied in MV and LV networks. The physical behavior of MV and LV networks, concerning the resistive nature of this kind of grids, are not taken into consideration in this droop functions. The theoretical background of control scheme based on the frequency and voltage droop which takes the resistive (R) and reactive (X) line impedance ratio into account is introduced in the publication "A Voltage and Frequency Droop Control Method for Parallel Inverters" by K. De Brabandere, B. Bolsens, J. Van den Keybus, A. Woyte, J. Driesen, R. Belmans, IEEE Transactions on Power Electronic, Vol. 22(4), pp- 1107-1115, 2007. However, to achieve an efficient adaptive droop control, taking the resistive and reactive line impedance ratio into account is not sufficient.

It is therefore an object of the present invention to provide a new method for actively controlling the voltage and the frequency of a grid feeding power generating unit in order to get a balanced load sharing amongst all the power generators feeding the grid, the method being able to be efficiently applied in EHV and HV as well as in MV and LV networks.

This object is achieved by the method according to claim 1. Advantageous further developments are given in the subclaims and described hereinafter.

According to the invention it is proposed a method for actively controlling in a feedback control at least one output parameter ($f_i$, $V_i$, $P_i$, $Q_i$) of a decentralized power generating unit feeding power into a power supply grid having a plurality of such decentralized power generating units, the power generating unit being coupled to the grid at a grid tied point, wherein the actual resistance ($R_i$), reactance ($X_i$) and magnitude ($|z_i|$) of the impedance ($\underline{Z}_i$) of the power generating unit (1) at the tied point is determined and a first quotient ($R_i/|Z_i|$) between the resistance ($R_i$) and impedance magnitude ($|Z_i|$) and a second quotient ($X_i/|Z_i|$) between the reactance ($X_i$) and the impedance magnitude ($|Z_i|$) is calculated and used for the feedback control of the at least one output parameter ($f_i$, $V_i$, $P_i$, $Q_i$).

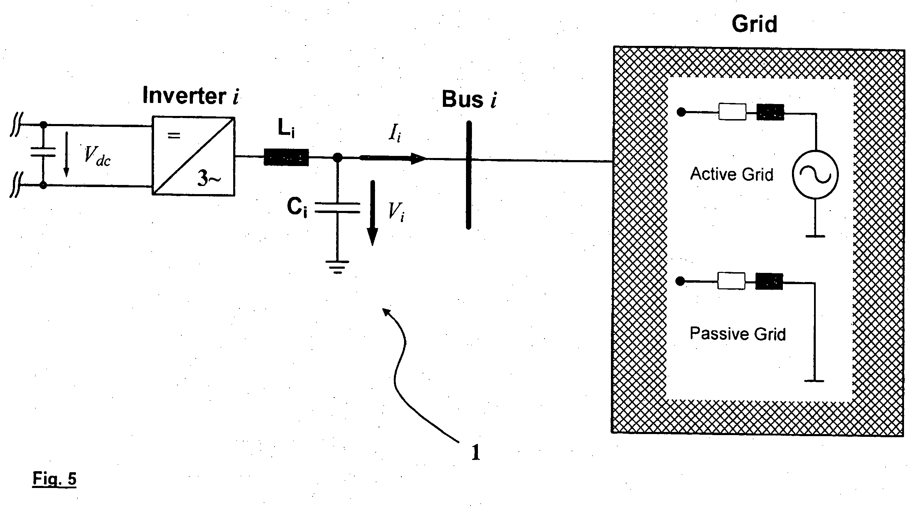

The basic idea of the method according to the invention is to take into account the individual impedance of the grid tied point of each power generating unit 1, as shown in Fig. 5 which is the main important key aspect of the present method according to the invention leading to a general Adaptive Grid Impedance Droop Control, abbreviated as AGIDC in the following. Moreover, the proposed developed general AGIDC in combination with a gate impedance measurement method can handle any change of any disturbance in any voltage level of power system.

A gate impedance measurement method that could be used is, for example, known from Bernd Voges: "Schutzmaßnahmen gegen Selbstlauf dezentraler Wandlersysteme in elektrischen Energieversorgungsnetzen", Dissertation Universität Paderborn, D14-123, 1997, page 43 and following, or from Detlef Schulz: "Netzruckwirkungen - Theorie, Simulation, Messung und Bewertung", VDE-Verlag, 1. Issue 2004, ISBN-Nr.: 3-8007-2757-9, page 65 and following.

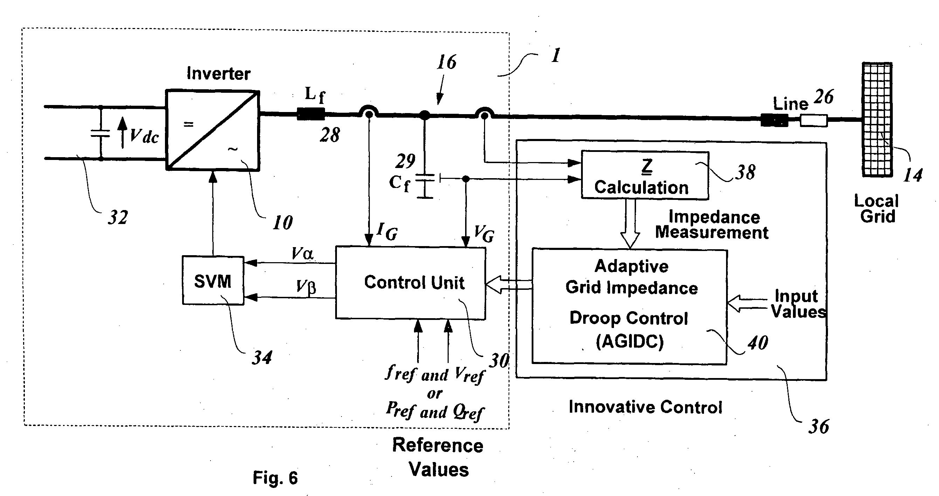

Fig. 6 shows the innovative control method of a power generating unit 1 according to the invention operating with a grid-driven feeding mode inverter 10 (grid forming D or grid supporting E) based on AGIDC and grid impedance measurement. The schematic disclosure of Fig. 6 is based on Fig. 3 expanded by an innovative control unit 36 in which the proposed innovative control method is implemented. This control unit 36 comprises an impedance determination unit 38 to determine the resistive impedance $R_i$ and the reactive impedance $X_i$ of the power generating unit 1 at the grid tied point 16 and an adaptive grid impedance droop control (AGIDC) unit 40. The adaptive grid impedance droop control (AGIDC) for the inverter 10 in grid-driven feeding mode B (grid forming D or grid supporting E) is explained in the following.

The impedance determination unit 38 can determine the resistive impedance $R_i$ and the reactive impedance $X_i$ of the power generating unit 1 as described in the following:

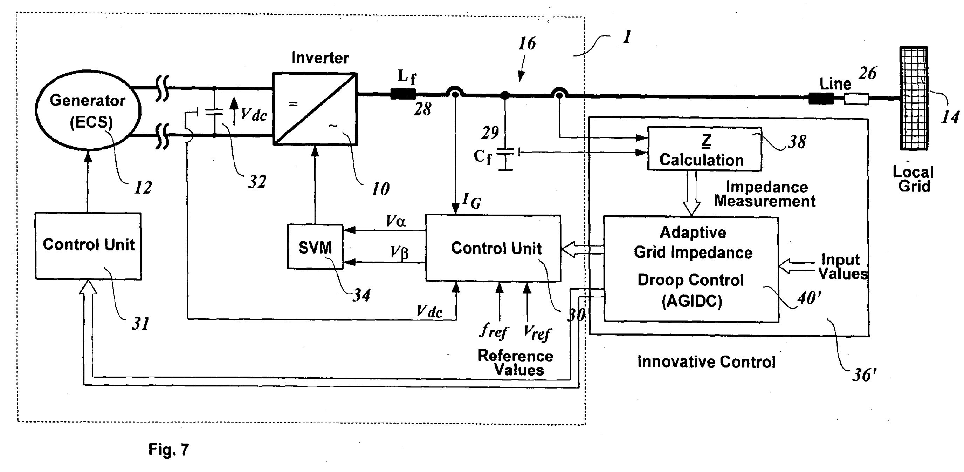

With reference to impedance determination unit 38 in Fig. 6 and Fig. 7, a high resolution of current $I_G$ and voltage $V_G$ is necessary for the impedance calculation algorithm of function block 38, i.e. impedance determination unit. The complex impedance $\underline{Z}$ is given by

$$\underline{Z} = R + jX = \frac{\underline{V}}{\underline{I}} = \frac{Ve^{j\delta}}{Ie^{j\gamma}} = \frac{V}{I}\,e^{j(\delta-\gamma)}$$

where $R$ is a real part and $X$ is an imaginary part. In the case under consideration the complex voltage $\underline{V}$ and the complex current $\underline{I}$ are assumed to be stationary sinusoidal functions. However, the relation between the impedance and the frequency has to be taken into account. The description based on measurement classification is clarified in Voges, page 44 (see literature reference given above).

To determine the complex impedance, it is obviously that the absolute value of voltage and current are necessary. However, the phase shift between voltage and current is also required in order to calculate the impedance angle ($\alpha = \delta - \gamma$).

The determination methods are divided into two groups (see also Voges):

- Measurement of above nominal frequency
- Measurement of steady state frequency.

Problems of the impedance determination method and further information are discussed in Voges.

In facts, the determination of complex impedance is done through the injection of current or power at the grid connection point (Fig. 6 and Fig. 7). Accordingly, the values of current $I_G$ and voltage $V_G$ at connection point are measured (in single-phase as well as in multi-phase systems) and applied to function block 38 (Fig. 6 and Fig. 7) in order to calculate

the complex impedance $\underline{Z}$. Moreover, the time resolution and the accuracy of the measurement of the voltage and current is an important factor of the algorithm in function block 38 to get the values of the impedance $\underline{Z}$ with sufficient accuracy for the AGIDC.

Afterwards, the calculated complex grid impedance is applied to AGIDC function block 40 (Fig. 6 and Fig. 7). Regarding the calculation process, the complex grid impedance can be determined and transferred cyclically (at fixed time points) as well as event-driven. Through this, the controller parameter can be adaptively controlled based on the AGIDC function block 40.

Fig. 7 shows the innovative control method of a power generating unit 1 according to the invention operating an ECS-driven feeding mode inverter 10 (grid parallel C) based on AGIDC and grid impedance measurement. The schematic disclosure of Fig. 7 is based on Fig. 4 expanded by an innovative control 36' in which the proposed innovative control method is implemented. This control 36' comprises an impedance determination unit 38 as previously described with reference to Fig. 6 to determine the resistive impedance $R_i$ and the reactive impedance $X_i$ of the power generating unit 1 at the grid tied point 16 and an adaptive grid impedance droop control (AGIDC) unit 40'. Furthermore, Fig. 7 depicts another control unit 31 that receives output parameters of the adaptive grid impedance droop control (AGIDC) unit 40' for controlling the ECS 12, in particular a synchronous generator, feeding DC-link 32. The adaptive grid impedance droop control (AGIDC) for the inverter 10 in grid-parallel mode C is explained in the following.

According to the invention the controlled output parameter can be the frequency $f_i$ of the power generating unit, wherein the method can comprise the steps of:

- determining the actual active power $P_i$ and reactive power $Q_i$ of the power generating unit that are fed into the grid at the grid tied point,
- calculating the active power difference $\Delta P_i$ between the actual active power $P_i$ delivered from the power generating unit 1 and a given reference active power $P_{ref,i}$,
- calculating the reactive power difference $\Delta Q_i$ between the actual active power $Q_i$ delivered from the power generating unit 1 and a given reference active power $Q_{ref,i}$,
- using the second quotient $X_i/|Z_i|$ to calculate a first frequency product $\Delta f_{i,P}$ of the active power difference $\Delta P_i$, the second quotient $X_i/|Z_i|$ and a given frequency droop factor $K_{f,i}$,
- using the first quotient $R_i/|Z_i|$ to calculate a second frequency product $\Delta f_{i,Q}$ of the reactive power difference $\Delta Q_i$, the first quotient $R_i/|Z_i|$ and the frequency droop factor $K_{f,i}$, and
- calculating the sum of the first $\Delta f_{i,P}$ and the negative second frequency product $\Delta f_{i,Q}$ to get a frequency correction term $\Delta f_{i,P} - \Delta f_{i,Q}$ which is added to the error $f_{ref} - f_i$ of the feedback control of the frequency $f_i$.

These method steps can be used for the frequency droop control of a power generating unit with an inverter or synchronous generator in grid forming mode D.

Additionally or alternatively, the controlled output parameter or another controlled output parameter can be the voltage $V_i$ of the power generating unit. In this case the method uses the precalculated active power difference $\Delta P_i$ and reactive power difference $\Delta Q_i$ and further comprises the steps of:

- using the first quotient $R_i/|Z_i|$ to calculate a first voltage product $\Delta V_{i,P}$ of the active power difference $\Delta P_i$, the first quotient $R_i/|Z_i|$ and a given voltage droop factor $K_{V,i}$,
- using the second quotient $X_i/|Z_i|$ to calculate a second voltage product $\Delta V_{i,Q}$ of the reactive power difference $\Delta Q_i$, the second quotient $X_i/|Z_i|$ and the voltage droop factor $K_{V,i}$, and
- calculating the sum of the first $\Delta V_{i,P}$ and the second voltage product $\Delta V_{i,Q}$ to get a voltage correction term $\Delta V_{i,P} + \Delta V_{i,Q}$ which is added to the error $V_{ref,i} - V_i$ of the feedback control of the voltage $V_i$.

These method steps can be used for the voltage droop control of a power generating unit with an inverter or synchronous generator in grid forming mode D. Together the frequency droop control and voltage droop control form the adaptive grid impedance droop control (AGIDC) for an inverter or synchronous generator in grid forming mode D.

In another embodiment of the invention the controlled output parameter can be the active power $P_i$ of the power generating unit. In this case the method can comprise the steps of:

- determining the actual frequency $f_i$ and voltage $V_i$ of the power generating unit at the grid tied point,
- calculating the frequency difference $\Delta f_i$ between the actual frequency $f_i$ of the power generating unit 1 and a given reference frequency $f_{ref}$,
- calculating the voltage difference $\Delta V_i$ between the actual voltage $V_i$ of the power generating unit and a given reference voltage $V_{ref,i}$,
- using the second quotient $X_i/|Z_i|$ to calculate a first active power product $\Delta P_{i,f}$ of the frequency difference $\Delta f_i$, the second quotient $X_i/|Z_i|$ and a given active power droop factor $1/K_{f,i}$,

- using the first quotient $R_i/|Z_i|$ to calculate a second active power product $\Delta P_{i,V}$ of the voltage difference $\Delta V_i$, the first quotient $R_i/|Z_i|$ and the active power droop factor $1/K_{f,i}$, and
- calculating the sum of the first $\Delta P_{i,f}$ and the negative second active power product $\Delta P_{i,V}$ to get an active power correction term $\Delta P_{i,f} + \Delta P_{i,V}$ which is added to the error $P_{ref,i} - P_i$ of the feedback control of the active power $P_i$.

These method steps can be used for the active power droop control of a power generating unit with an inverter or synchronous generator in grid supporting mode E or with an ECS-driven inverter in grid parallel mode C.

Additionally or alternatively, the controlled output parameter can be the reactive power $Q_i$ of the power generating unit. In this case the method uses the precalculated frequency difference $\Delta f_i$ and voltage difference $\Delta V_i$ and further comprises the steps of:

- using the first quotient $R_i/|Z_i|$ to calculate a first reactive power product $\Delta Q_{i,f}$ of the frequency difference $\Delta f_i$, the first quotient $Ri/|Z_i|$ and a given reactive power droop factor $1/K_{V,i}$,
- using the second quotient $X_i/|Z_i|$ to calculate a second reactive power product $\Delta Q_{i,V}$ of the voltage difference $AV_i$, the second quotient $X_i/|Z_i|$ and the reactive power droop factor $1/K_{V,i}$, and
- calculating the sum of the first $\Delta Q_{i,f}$ and the second reactive power product $\Delta Q_{i,V}$ to get a reactive power correction term $\Delta Q_{i,f} + \Delta Q_{i,V}$ which is added to the error $Q_{ref,i} - Q_i$ of the feedback control of the reactive power $Q_i$.

These steps can be used for the reactive power droop control of a power generating unit with an inverter or synchronous generator in grid supporting mode E or with an ECS-driven inverter in grid parallel mode C. Together the active power droop control and reactive power droop control form the adaptive grid impedance droop control (AGIDC) for an inverter or synchronous generator in grid supporting mode E or for an ECS-driven inverter in grid parallel mode C.

To be clearly described, the physical behavior of load flow will be the starting point to analyze the problem. This physical behavior concerning the control tasks in electrical power systems can be pointed out in the mathematical way by decoupled load flow description, as done in "Power System Analysis" by J. Grainger and W. Stevenson, "McGraw-Hill Series in Electrical and Computer Engineering", ISBN 0-07-061293-5.

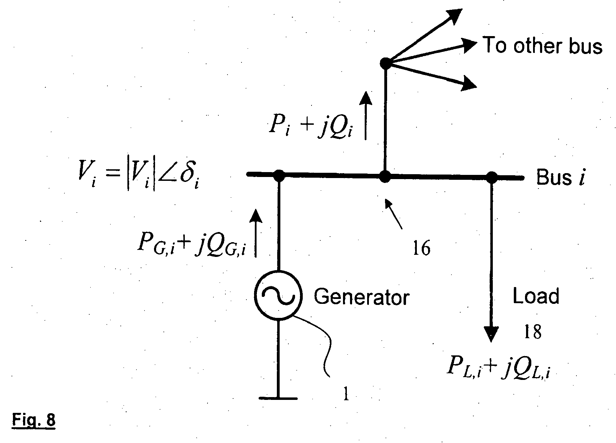

For a general power network, complex power at sending bus-$i$, i.e. the grid tied point at which a power generating unit is connected to the grid, can be also described as Fig. 8. The equations for the active power $P_i$ and reactive power $Q_i$ represent the power flow delivered into the network at bus-$i$, i.e. at the grid tied point, which can be expressed as polar form equations:

$$P_i = P_{G,i} - P_{L,i} = \sum_{j=1}^{n} V_i \cdot V_j \cdot Y_{ij} \cdot \cos(\delta_i - \delta_j - \theta_{ij}) \qquad \text{Eq. 1}$$

$$Q_i = Q_{G,i} - Q_{L,i} = \sum_{j=1}^{n} V_i \cdot V_j \cdot Y_{ij} \cdot \sin(\delta_i - \delta_j - \theta_{ij}) \qquad \text{Eq. 2}$$

where n is the number of buses in the network. $P_{G,i}$ is the scheduled active power being generated at bus-$i$ and $P_{L,i}$ is the active power load at bus-$i$. Likewise for reactive power, $Q_{G,i}$ is the scheduled reactive power being generated at bus-$i$ and $Q_{L,i}$ is the reactive power load at bus-$i$. $V_i$ is the voltage at bus-$i$. $V_j$ is the voltage at bus-$j$. $Y_{ij}$ is the $i - j$ admittance element. $\theta_{ij}$ is the angle of $i - j$ admittance element. $\delta_i$ is the voltage angle at bus-$i$. $\delta_j$ is the voltage angle at bus-$j$.

To show the relationship of active power, reactive power, voltage angle and voltage magnitude, the linearized equation for the load flow related to these variables can be described as:

$$\begin{bmatrix} \Delta P \\ \Delta Q \end{bmatrix} = \begin{bmatrix} \mathbf{J} \end{bmatrix} \begin{bmatrix} \Delta \delta \\ \Delta V \end{bmatrix} \qquad \text{Eq. 3}$$

where $\Delta P$ is the linearized active power, $\Delta Q$ is the linearized reactive power, $\Delta \delta$ is the linearized voltage angle, $\Delta V$ is the linearized voltage magnitude. [J] is Jacobian matrix, which can be expressed as:

$$[J] = \begin{bmatrix} J_{11} & J_{12} \\ J_{21} & J_{22} \end{bmatrix} = \begin{bmatrix} \partial P / \partial \delta & \partial P / \partial V \\ \partial Q / \partial \delta & \partial Q / \partial V \end{bmatrix} \qquad \text{Eq. 4}$$

Considering that for the slack bus, i.e. the grid tied point, the voltage magnitude $V$ and voltage angle $\delta$ are known the linearized equation for the load flow for $n$ buses can be expressed as:

$$\begin{bmatrix} \Delta P_2 \\ \vdots \\ \Delta P_n \\ \Delta Q_2 \\ \vdots \\ \Delta Q_n \end{bmatrix} = \begin{bmatrix} \partial P_2 / \partial \delta_2 & \cdots & \partial P_2 / \partial \delta_n & \partial P_2 / \partial V_2 & \cdots & \partial P_2 / \partial V_n \\ \vdots & & \vdots & \vdots & & \vdots \\ \partial P_n / \partial \delta_2 & \cdots & \partial P_n / \partial \delta_n & \partial P_n / \partial V_2 & \cdots & \partial P_n / \partial V_n \\ \partial Q_2 / \partial \delta_2 & \cdots & \partial Q_2 / \partial \delta_n & \partial Q_2 / \partial V_2 & \cdots & \partial Q_2 / \partial V_n \\ \vdots & & \vdots & \vdots & & \vdots \\ \partial Q_n / \partial \delta_2 & \cdots & \partial Q_n / \partial \delta_n & \partial Q_n / \partial V_2 & \cdots & \partial Q_n / \partial V_n \end{bmatrix} \begin{bmatrix} \Delta \delta_2 \\ \vdots \\ \Delta \delta_n \\ \Delta V_2 \\ \vdots \\ \Delta V_n \end{bmatrix}$$

$$\text{Eq. 5}$$

In power transmission networks with an inductive behavior the so-called "decoupled power flow method" can be used to describe the relation of the active power, reactive power, voltage angle and voltage magnitude. The principle of the method is based on the two main mathematical and physical relations:

- Small change in voltage angle $\delta$ at a bus effects more or less only the active power P transmission into the grid.
- Small change in voltage magnitude $V$ at a bus effects more or less only the reactive power Q transmission into the grid.

These causes will lead to the results concerning the Jacobi matrix [J] as follows:

$|\partial P/\partial \delta| >> |\partial Q/\partial \delta|$ gives that the elements of the submatrix $\mathbf{J_{21}}$ is approximately zero and
$|\partial Q/\partial V| >> ||\partial P/\partial V|$ gives that the elements of the submatrix $\mathbf{J_{12}}$ is approximately zero.

It can be summarized that the active power $P$ is related directly to the voltage angle $\delta$ while the reactive power $Q$ is related directly to the voltage magnitude $V$. As a result, the linearized equation can be described as:

$$\begin{bmatrix} \Delta P_2 \\ \vdots \\ \Delta P_n \\ \Delta Q_2 \\ \vdots \\ \Delta Q_n \end{bmatrix} = \begin{bmatrix} \partial P_2 / \partial \delta_2 & \cdots & \partial P_2 / \partial \delta_n & & & \\ \vdots & & \vdots & & & \\ \partial P_n / \partial \delta_2 & \cdots & \partial P_n / \partial \delta_n & & & \\ & & & \partial Q_2 / \partial V_2 & \cdots & \partial Q_2 / \partial V_n \\ & & & \vdots & & \vdots \\ & & & \partial Q_n / \partial V_2 & \cdots & \partial Q_n / \partial V_n \end{bmatrix} \begin{bmatrix} \Delta \delta_2 \\ \vdots \\ \Delta \delta_n \\ \Delta V_2 \\ \vdots \\ \Delta V_n \end{bmatrix}$$

$$\text{Eq. 6}$$

This matrix is called as a "$P$-$Q$ decoupling". This matrix equation Eq. 6 can be separated into two individual equations as:

$$\begin{bmatrix} \Delta P_2 \\ \vdots \\ \Delta P_n \end{bmatrix} = \begin{bmatrix} \partial P_2 / \partial \delta_2 & \cdots & \partial P_2 / \partial \delta_n \\ \vdots & & \vdots \\ \partial P_n / \partial \delta_2 & \cdots & \partial P_n / \partial \delta_n \end{bmatrix} \begin{bmatrix} \Delta \delta_2 \\ \vdots \\ \Delta \delta_n \end{bmatrix} \qquad \text{Eq. 7}$$

$$\begin{bmatrix} \Delta Q_2 \\ \vdots \\ \Delta Q_n \end{bmatrix} = \begin{bmatrix} \partial Q_2 / \partial V_2 & \cdots & \partial Q_2 / \partial V_n \\ \vdots & & \vdots \\ \partial Q_n / \partial V_2 & \cdots & \partial Q_n / \partial V_n \end{bmatrix} \begin{bmatrix} \Delta V_2 \\ \vdots \\ \Delta V_n \end{bmatrix} \qquad \text{Eq. 8}$$

In the dynamic system behavior the voltage angle $\delta$ is related to the frequency of the grid. This means, changes in the voltage angle $\delta$ can only be effected by changes in the frequency. From the control point of view, in the transmission networks with an inductive behavior, the active power $P$ is consequently related to the system frequency. The reactive power $Q$ is related to the voltage. This will lead to the basic traditional frequency and voltage droop control of conventional power generating units (grid forming case D), which can be written as:

$$\left( f_{ref} - f_i \right) = K_{f,i} \cdot \left( P_{ref,i} - P_i \right) \qquad \text{Eq. 9}$$

$$\left( V_{ref,i} - V_i \right) = K_{V,i} \cdot \left( Q_{ref,i} - Q_i \right) \qquad \text{Eq. 10}$$

In terms of the dynamic system description, in Eq. 9 and Eq. 10, $f_{ref}$ is a given reference frequency, for example 50Hz or 60Hz, $f_i$ is the actual system frequency in the tied point of the generating unit $i$. $K_{f,i}$ is frequency droop factor of generating unit $i$. $P_{ref,i}$ is reference active power the generating unit $I$ shall provide. $P_i$ is the actual active power output of generating unit $i$. $V_{ref,i}$ is reference voltage the generating unit $i$ shall deliver. $V_i$ is the actual voltage of generating unit $i$. $K_{V,i}$ is voltage droop factor of generating unit $i$. $Q_{ref,i}$ is reference reactive power the generating unit $i$ shall provide. $Q_i$ is the actual reactive power output of generating unit $i$.

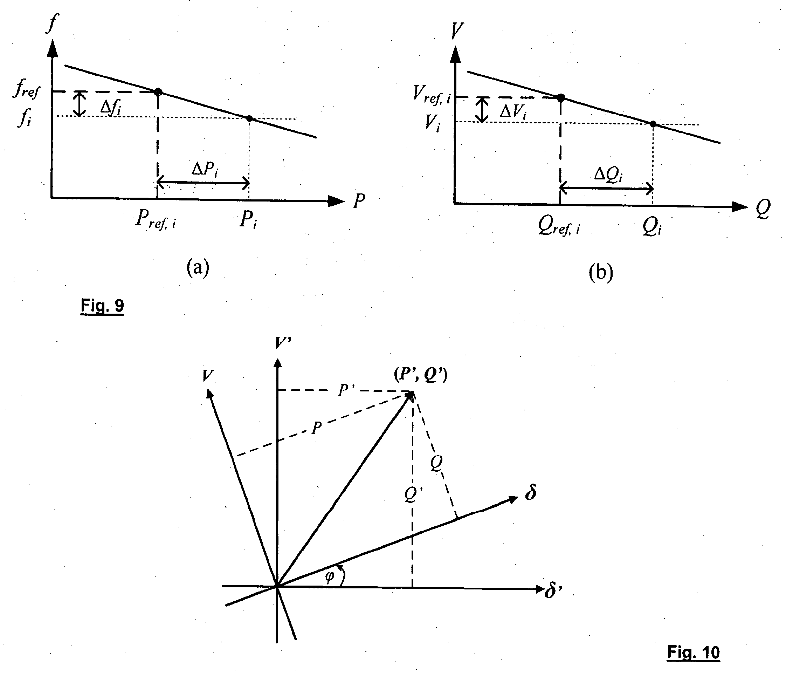

Fig. 9 shows the traditional frequency and voltage droop control relation, which are used in the UCTE Grid Code (UCTE: "Operation Handbook - Introduction", a.m. and UCTE: "Operational Handbook - Policy 1: Load-Frequency Control", a.m.). However, as mentioned, the conventional droop functions cannot be used efficiently when applied in MV and LV networks. The reason is that the electrical behavior concerning the grid impedance is related to the resistive nature of the grid. The conventional droop control strategy cannot handle the maintenance of the state variables in the unit control. Therefore, a new droop control is needed to handle the special behavior in MV and LV grids. The following introduced method offers a flexible and general droop control function for power electronic inverters and synchronous generators. The described method is an adaptive control strategy, which takes the grid impedance characteristic into consideration for establishing the droop control function.

When the relation between the real part $R$ and imaginary part $jX$ of the complex grid impedance $Z = R + jX$ in the tied point of the generating unit changes, this will lead to the change in the relation between frequency $f$ (voltage angle $\delta$) and active power $P$ as well as the relation between the magnitude of the voltage $V$ and reactive power $Q$. To describe the relation of active and reactive power on frequency and voltage, the rotation transformation of the plane can be used to interpret the relation in a mathematical way. Fig. 10 shows two different reference frames which are the $\delta'V$-coordinate system and the $\delta V$-coordinate system. The $\delta V$-coordinate plane rotates by a counterclockwise rotating angle $\varphi$ in the unrotated $\delta'V$-coordinate system. The position of $P'$ and $Q'$ values in the unrotated $\delta'V$-coordinate system, in terms of $P$ and $Q$ values in the rotated $\delta V$-coordinate system, has to be considered. The $P'$ and $Q'$ can be written as functions of rotating angle $\varphi$, active power $P$ and reactive power $Q$ in the following general form:

$$P' = f_1(P, Q, \varphi) \qquad \text{Eq. 11}$$

$$Q' = f_2(P, Q, \varphi) \qquad \text{Eq. 12}$$

In Eq. 13 and Eq. 14, the active power $P$ and reactive power $Q$ are stated in the $5V$-rotated coordinate plane while the active power $P'$ and reactive power $Q'$ are stated in the $\delta'V'$- unrotated coordinate plane. The relation between the impedance of the grid tied point of each unit is implemented into the droop control for dynamic power and load sharing. The conventional droop control in Eq. 9 and Eq. 10 can be adapted based on the rotation transformation to get a new droop control which is related to the change of the grid impedance. The new frequency and voltage droop control (grid forming case D) of the rotated coordinate system in respect to the unrotated coordinate system for generating unit $i$ can be rewritten in general as:

$$(f_{ref} - f_i) = K_{f,i} \cdot (P'_{ref,i} - P'_i) \qquad \text{Eq. 13}$$

$$(V_{ref} - V_i) = K_{V,i} \cdot (Q'_{ref,i} - Q'_i) \qquad \text{Eq. 14}$$

In terms of the dynamic system description, in Eq. 11 and Eq. 12, $f_{ref}$ is the reference frequency of the grid, e.g. 50Hz or 60Hz, $f_i$ is the actual system frequency in the tied point of the generating unit $i$. $K_{f,i}$ is frequency droop factor of generating unit $i$. $V_{ref,i}$ is reference voltage of generating unit $i$. $V_i$ is voltage of generating unit $i$. $K_{V,i}$ is voltage droop factor of generating unit $i$. $P'_{ref,i}$ and $Q'_{ref,i}$ are the projected reference active and reactive power of generating unit $i$ from rotated plane in respect to the unrotated coordinated system respectively. $P'_i$ and $Q'_i$ are the projected active and reactive power of generating unit $i$ from rotated plane in respect to the unrotated coordinated system respectively.

Regarding the Eq. 13 and Eq. 14, $P'$ and $Q'$ functions stated in unrotated coordinated system can be derived in the terms of rotating angle $\varphi$, active power $P$ and reactive power $Q$ as following.

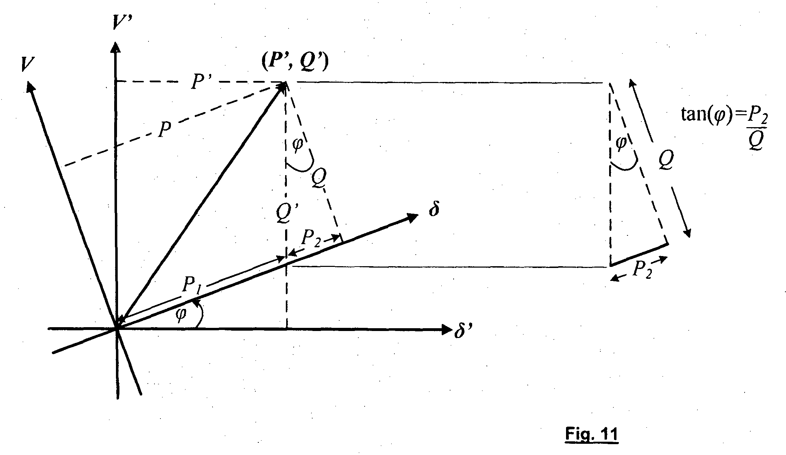

To derive $P'$ in the terms of $\varphi$, $P$ and $Q$, variables $P_1$ and $P_2$ are assumed as shown in Fig. 11. The general equation of active power in rotated $\delta V$-coordinate system can be expressed as:

$$P_1 = P - P_2 \qquad \text{Eq. 15}$$

where $P_2 = Q \tan(\varphi)$ as shown in Fig. 11; this leads to

$$P_1 = P - Q \tan(\varphi) \qquad \text{Eq. 16}$$

Eq.16 multiply with cos($\varphi$) gives

$$
\begin{aligned}
P_1 \cos(\varphi) &= P \cos(\varphi) - Q \tan(\varphi) \cos(\varphi) \\
&= P \cos(\varphi) - Q \frac{\sin(\varphi)}{\cos(\varphi)} \cos(\varphi) \qquad \text{Eq. 17} \\
&= P \cos(\varphi) - Q \sin(\varphi)
\end{aligned}
$$

Eq. 17 are substituted by $P_1 \cos(\varphi) = P'$, this leads to

$$P' = P\cos(\varphi) - Q\sin(\varphi) \qquad \text{Eq. 18}$$

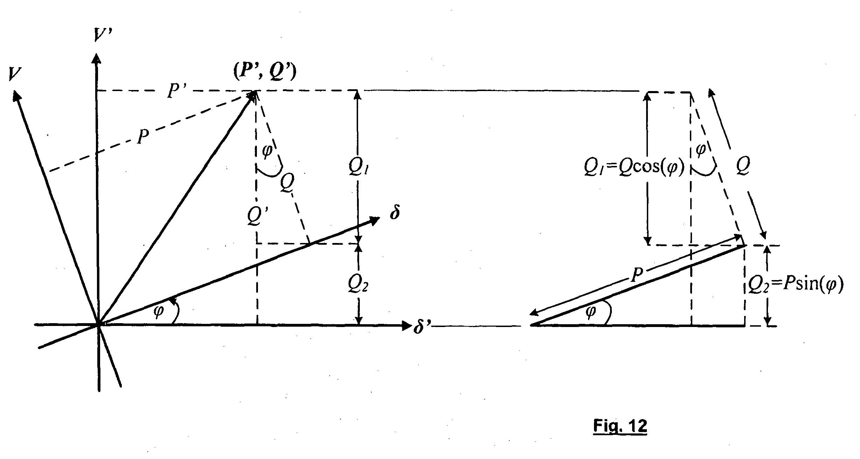

To derive $Q'$ in the terms of $\varphi$, $P$ and $Q$, variables $Q_1$ and $Q_2$ are assumed as shown in Fig. 12. The general equation of reactive power in rotated $\delta V$-coordinate system can be expressed as:

$$Q' = Q_1 + Q_2 \qquad \text{Eq. 19}$$

where $Q_1 = Q\cos(\varphi)$ and $Q_2 = P \sin(\varphi)$ as shown in Fig. 12; this leads to

$$Q' = Q\cos(\varphi) + P\sin(\varphi) \qquad \text{Eq. 20}$$

Therefore, new active power $P'$ and reactive power $Q'$ can be also modified by rotation transformation matrix based on Eq. 18 and Eq. 20 as follows:

$$\begin{bmatrix} P' \\ Q' \end{bmatrix} = \begin{bmatrix} \cos\varphi & -\sin\varphi \\ \sin\varphi & \cos\varphi \end{bmatrix} \begin{bmatrix} P \\ Q \end{bmatrix} \qquad \text{Eq. 21}$$

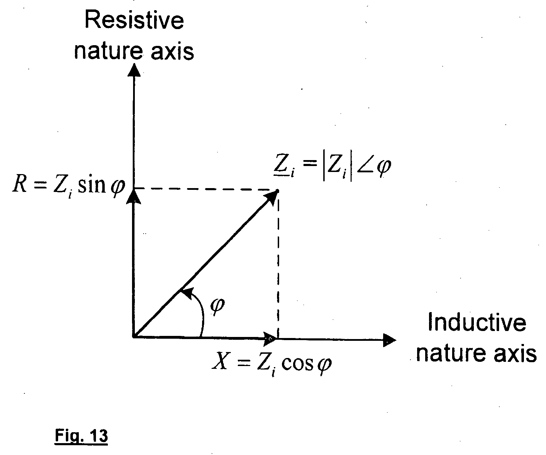

As the rotating angle $\varphi$ is moving within the unrotated $\delta'V$-coordinate system which is referred for the inductive nature axis, the rotated $\delta V$-coordinate system is referred for the resistive nature axis. Therefore, the relation of impedance $Z$ related to the rotating angle $\varphi$ from inductive nature axis to resistive nature axis can be illustrated as in Fig. 13 where $\underline{Z_i} = R + jX = |Z_i|e^{j\varphi}$. It can be concluded the relation between the rotation angle $\varphi$ and the resistance $R$ and reactance $X$ as well as follows:

$$\cos\varphi = \frac{X}{|Z|} \qquad \text{Eq. 22}$$

$$\sin\varphi = \frac{R}{|Z|} \qquad \text{Eq. 23}$$

The substitute of the Eq. 22 and Eq. 23 in the rotation matrix (Eq. 21) leads to the general relation:

$$\begin{bmatrix} P' \\ Q' \end{bmatrix} = \begin{bmatrix} \dfrac{X}{|Z|} & -\dfrac{R}{|Z|} \\ \dfrac{R}{|Z|} & \dfrac{X}{|Z|} \end{bmatrix} \begin{bmatrix} P \\ Q \end{bmatrix} \qquad \text{Eq. 24}$$

The matrix equation Eq. 24 describes the relation between active and reactive power regarding the impedance of the grid tied point of the individual unit. For both inductive and resistive nature, the resistance $R$ and reactance $X$ related to the gate impedance of the grid tied point of the generating unit are taken into consideration: it leads to the general relation between active and reactive power:

$$P' = \left(\frac{X}{|Z|}\right)P - \left(\frac{R}{|Z|}\right)Q \qquad \text{Eq. 25}$$

$$Q' = \left(\frac{R}{|Z|}\right)P + \left(\frac{X}{|Z|}\right)Q \qquad \text{Eq. 26}$$

The relation between the impedance $Z_i$ of the grid tied point of each unit $i$ can be implemented into the droop control for load sharing as described in Eq. 13 and Eq. 14. In combination of Eq. 13, Eq. 14, Eq. 25 and Eq. 26, the new frequency droop control for a generating unit $i$ in grid forming mode D can be described in a mathematical equation as:

$$
\begin{aligned}
\left(f_{ref} - f_i\right) &= K_{f,i} \cdot \left(P'_{ref,i} - P_i'\right) \\
&= K_{f,i} \cdot \left(\left(\left(\frac{X_i}{|Z_i|}\right)P_{ref,i} - \left(\frac{R_i}{|Z_i|}\right)Q_{ref,i}\right) - \left(\left(\frac{X_i}{|Z_i|}\right)P_i - \left(\frac{R_i}{|Z_i|}\right)Q_i\right)\right) \\
&= K_{f,i} \cdot \left(\left(\frac{X_i}{|Z_i|}\right)P_{ref,i} - \left(\frac{X_i}{|Z_i|}\right)P_i - \left(\frac{R_i}{|Z_i|}\right)Q_{ref,i} + \left(\frac{R_i}{|Z_i|}\right)Q_i\right) \\
&= K_{f,i} \cdot \left(\frac{X_i}{|Z_i|}\right)\left(P_{ref,i} - P_i\right) - K_{f,i} \cdot \left(\frac{R_i}{|Z_i|}\right)\left(Q_{ref,i} - Q_i\right)
\end{aligned}
$$

$$\text{Eq. 27}$$

And a new voltage droop control for a generating unit $i$ in grid forming mode D can be described in a mathematical equation as:

$$\left(V_{ref,i} - V_i\right) = K_{V,i} \cdot \left(Q'_{ref,i} - Q'_i\right)$$

$$= K_{V,i} \cdot \left(\left(\left(\frac{R_i}{|Z_i|}\right)P_{ref,i} + \left(\frac{X_i}{|Z_i|}\right)Q_{ref,i}\right) - \left(\left(\frac{R_i}{|Z_i|}\right)P_i + \left(\frac{X_i}{|Z_i|}\right)Q_i\right)\right)$$

$$= K_{V,i} \cdot \left(\left(\frac{R_i}{|Z_i|}\right)P_{ref,i} - \left(\frac{R_i}{|Z_i|}\right)P_i + \left(\frac{X_i}{|Z_i|}\right)Q_{ref,i} - \left(\frac{X_i}{|Z_i|}\right)Q_i\right)$$

$$= K_{V,i} \cdot \left(\frac{R_i}{|Z_i|}\right)\left(P_{ref,i} - P_i\right) + K_{V,i} \cdot \left(\frac{X_i}{|Z_i|}\right)\left(Q_{ref,i} - Q_i\right)$$

Eq. 28

In terms of the dynamic system description, in Eq. 27 and Eq. 28, $f_{ref}$ is the reference frequency of the grid, $f_i$ is the actual system frequency in the tied point of the generating unit $i$. $K_{f,\,i}$ is frequency droop factor of generating unit $i$. $P_{ref,\,i}$ is the reference active power the generating unit $i$ shall provide. $P_i$ is the active power output of generating unit $i$. $V_{ref,\,i}$ is the reference voltage the generating unit $i$ shall provide. $V_i$ is the actual voltage of generating unit $i$. $K_{V,\,i}$ is the voltage droop factor of generating unit $i$. $Q_{ref,\,i}$ is the reference reactive power the generating unit $i$ shall provide. $Q_i$ is the actual reactive power output of generating unit $i$. $R_i$ is the resistance in the tied point of the generating unit $i$. $X_i$ is the reactance in the tied point of the generating unit $i$. $|Z_i|$ is the magnitude of impedance in the tied point of the generating unit $i$.

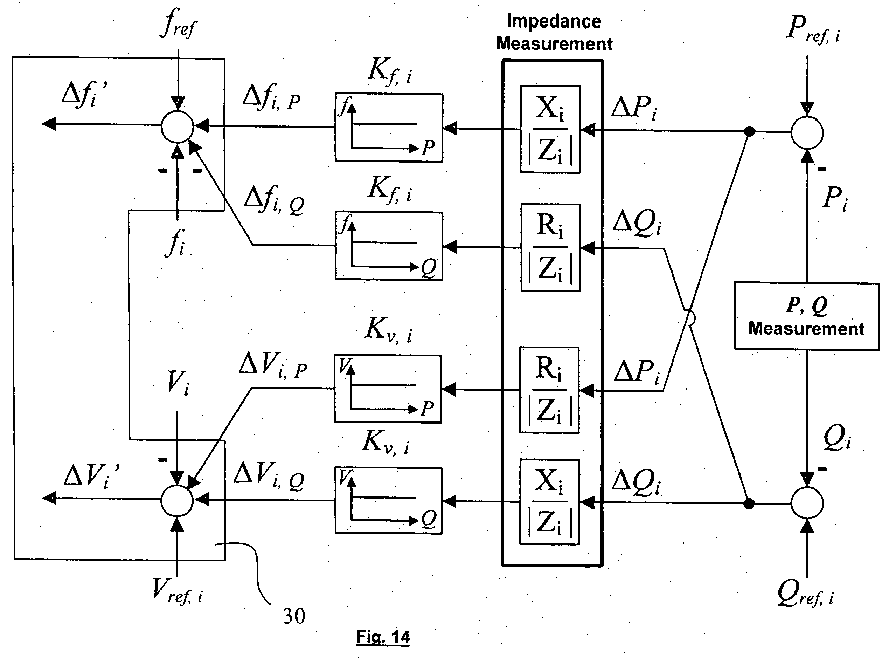

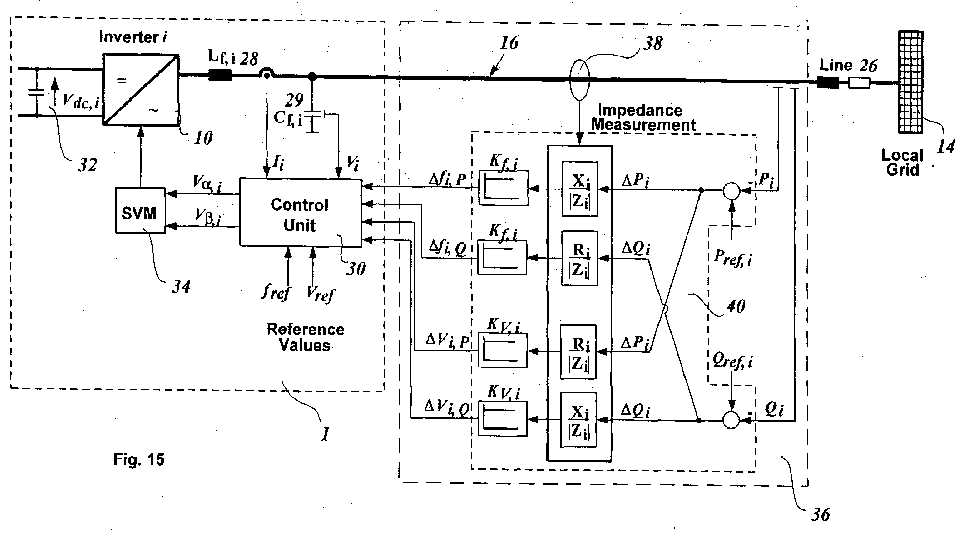

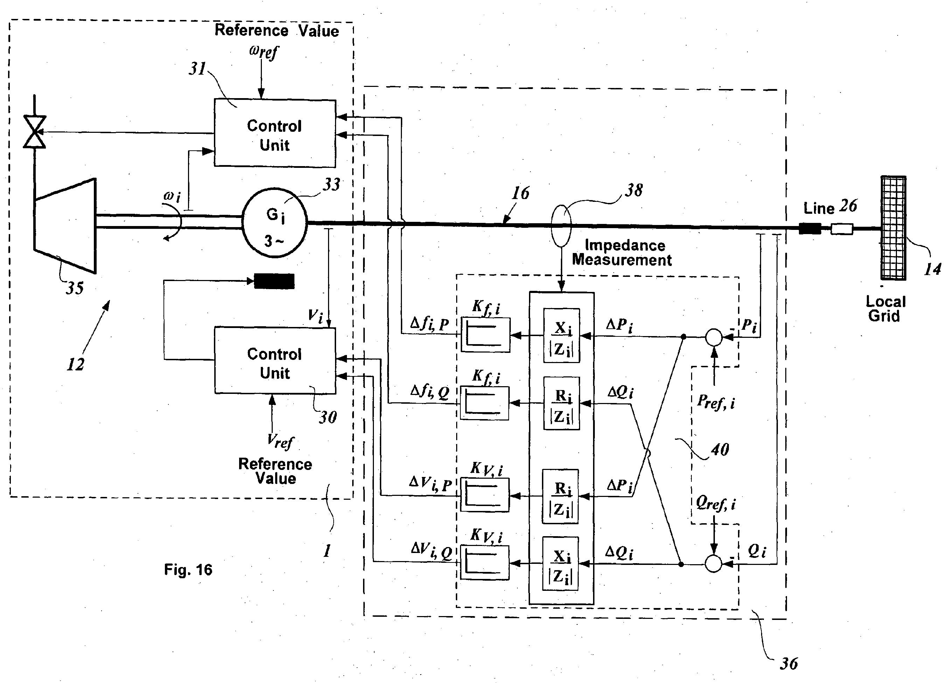

The new droop control based on Eq. 27 and Eq. 28 can be structured as the control structure diagram of the new droop control for grid forming mode D (power electronic inverter and synchronous generator) as shown in Fig. 14 which can be implemented into the control unit 40 in Fig. 6 as shown in Fig. 15 and Fig. 16 respectively.

Fig. 14 schematically shows the method steps of the new frequency droop control and the new voltage droop control each using the relation, i.e. the quotient between the resistance $R_i$ and impedance magnitude $|Z_i|$ and the relation, i.e the quotient of the reactance $X_i$ and the impedance magnitude $|Z_i|$ for the control of the power generating unit 1. As can be seen the actual active power $P_i$ and the reactive power $Q_i$ of the power generating unit 1 that are fed into the grid 14 are determined, for example by direct measurements or by measuring the voltage and current flow at the grid tied point 16 and calculating the active and reactive power from that voltage and current. A reference active power $P_{ref,i}$ and reference reactive power $Q_{ref,i}$ are given/ known. These reference values $P_{ref,I}$ and $Q_{ref,i}$ as well as the measured or calculated actual power values $P_i$ and $Q_i$ are input values for the new control unit 40 pursuant to Fig. 6.

From these values the active power difference $\Delta P_i$ between the actual active power $P_i$ delivered from the power generating unit 1 and the given reference active power $P_{ref,i}$ as well as the reactive power difference $\Delta Q_i$ between the actual reactive power $Q_i$ delivered from the power generating unit 1 and a given reference reactive power $Q_{ref,I}$ are calculated. Then a first quotient $R_i/|Z_i|$ of the resistance $R_i$ and impedance magnitude $|Z_i|$ and a second quotient $X_i/|Z_i|$ of the reactance $X_i$ and impedance magnitude $|Z_i|$ is used to calculate four products. The calculation of the first and second quotient may be performed at the stage the respective quotient value is needed or previously in a foregoing step, so that the value or values can be used later in proceeding steps. It is then calculated a first frequency product $\Delta f_{i,P}$ of the active power difference $\Delta P_i$, the second quotient $X_i/|Z_i|$ and a given frequency droop factor $K_{f,i}$, a second frequency product $\Delta f_{i,Q}$ of the reactive power difference $\Delta Q_i$, the first quotient $R_i/|Z_i|$ and the frequency droop factor $K_{f,i}$, a first voltage product $\Delta V_{i,P}$ of the active power difference $\Delta P_i$, the first quotient $R_i/|Z_i|$ and a given voltage droop factor $K_{V,i}$ and a second voltage product $\Delta V_{i,Q}$ of the reactive power difference $\Delta Q_i$, the second quotient $X_i/|Z_i|$ and the voltage droop factor $K_{V,i}$. The four products $\Delta f_{i,P}$, $\Delta f_{i,Q}$, $\Delta V_{i,P}$, $\Delta V_{i,P}$ are provided to control unit 30 controlling the frequency $f_i$ and the output voltage $V_i$ of the power generating unit 1.

Then the sum of the first frequency product $\Delta f_{i,P}$ and the negative second frequency product $\Delta f_{i,Q}$ is calculated to get a frequency correction term $\Delta f_{i,P} - \Delta f_{i,Q}$ which is subsequently added to the error $f_{ref} - f_i$ of the feedback control of the frequency $f_i$. This can be done within the new control unit 40 or control unit 30 as shown in Fig. 6 and 14. Furthermore, the sum of the first voltage product $\Delta V_{i,P}$ and the second voltage product $\Delta V_{i,Q}$ is calculated to get a voltage correction term $\Delta V_{i,P} + \Delta V_{i,Q}$ which is added to the error $V_{ref,i} - V_i$ of the feedback control of the voltage $V_i$. This can also be done within the new control unit 40 or control unit 30 as shown in Fig. 6 and 14. As can be seen in Fig. 6 given reference values for voltage $V_{ref}$ and frequency $f_{ref}$ are provided to control unit 30 to execute the frequency and voltage feedback control. Furthermore the measured voltage $V_G$ and current $I_G$ are inputted to control unit 30 which derives the actual frequency $f_i$ of the power generating unit 1 from one of these parameters. Again turning to Fig. 14 the calculation of the sum from the negative actual frequency $f_i$, the reference frequency $f_{ref}$ and frequency correction term $\Delta f_{i,P} - \Delta f_{i,Q}$ forms a new frequency error $\Delta f_i'$ which is the basis for the feeback control of the frequency. And the calculation of the sum from the negative actual voltage magnitude $V_i$, the reference voltage $V_{ref,I}$ and voltage correction term $\Delta V_{i,P} + \Delta V_{i,Q}$ forms a new voltage error $\Delta V_i'$ which is the basis for the feeback control of the voltage.

The new droop control in Fig. 14 can be implemented into the control unit 40 in Fig. 6 and, therefore, into the general control strategy of grid forming mode D for the generating unit $i$ (power electronic inverter and synchronous generator) as shown in Fig. 15 and Fig. 16 respectively.

Fig. 16 shows a general control of a power generating unit 1 operating in grid forming mode with inverter 10 droop control according to the invention. The relation between the impedance of the grid tied point of generating unit 1 is implemented into the new droop control unit 40. When the impedance $\overline{Z_i}$ of the grid tied point 16 of generating unit 1 changes, this will lead to the change in the relation between frequency $\overline{f_i}$, active power $P_i$, magnitude $V_i$ of the voltage and reactive power $Q_i$ of generating unit 1. For example, in the case of inductive nature (transmission network), the value of reactance $X_i$ is much higher than resistance $R_i$ ($X_i \gg R_i$). Therefore, the relation between reactive power $Q_i$ and system frequency can be neglected as well as the relation between active power $P_i$ and actual voltage $V_i$. On the other hand, in the case of resistive nature (distribution network), the value of reactance $X_i$ is much lower than resistance $R_i$ ($X_i \ll R_i$). Therefore, the relation between active power $P_i$ and system frequency $f_i$ can be neglected as well as the relation between active power $Q_i$ and actual voltage $V_i$. In summary, this new droop control strategy can be used and implemented into both inductive and resistive nature of power systems. This is due to the impedance $\overline{Z_i}$ of the grid tied point 16 of the generating unit 1 being taken into consideration for the dynamic control and sharing of power.

Likewise, the new droop control according to the invention which may be implemented into the control unit 36, 40 (see Fig. 16) for a synchronous generator 33, is operating the same way as the power electronic inverter 10 explained before. Fig. 16 shows a general control of an ECS 12, i.e. a power generating unit 1 operating in grid forming mode D with a synchronous generator 33 in the control of which the new droop control is implemented. The relation between the impedance of the grid tied point 16 of generating unit 1 is implemented into the new droop control unit 36. Its output values are partly provided to a first conventional control unit 30 controlling the excitation field winding of the synchronous generator 33 and partly to a second conventional control unit 31 controlling valves of ECS 12, for example a turbine 35 directly mechanically connected to the rotor of the synchronous generator 33.

In the case of grid supporting mode E, from the control point of view, in the transmission networks with an inductive behavior, the active power $P$ is related to the system frequency $f$. The reactive power $Q$ is related to the voltage $V$. This will lead to the basic traditional active and reactive power droop control of conventional power systems (grid supporting case E), which can be written as:

$$\left( P_{ref,i} - P_i \right) = \frac{1}{K_{f,i}} \cdot \left( f_{ref} - f_i \right) \qquad \text{Eq. 29}$$

$$\left( Q_{ref,i} - Q_i \right) = \frac{1}{K_{V,i}} \cdot \left( V_{ref,i} - V_i \right) \qquad \text{Eq. 30}$$

In terms of the dynamic system description, in Eq. 29 and Eq. 30, $f_{ref}$ is the reference frequency, $f_i$ is the actual system frequency in the tied point of the generating unit $i$. $K_{f,i}$ is frequency droop factor of generating unit $i$. $P_{ref,i}$ is reference active power of generating unit $i$. $P_i$ is active power output of generating unit $i$. $V_{ref,i}$ is reference voltage of generating unit $i$. $V_i$ is voltage of generating unit $i$. $K_{V,i}$ is voltage droop factor of generating unit $i$. $Q_{ref,i}$ is reference reactive power of generating unit $i$. $Q_i$ is reactive power output of generating unit $i$. Rotary frequency $\omega_{ref}$ as indicated in Fig. 16 equals $2\pi f_{ref}$. Only this reference value $\omega_{ref}$ is provided to control unit 31, and only the reference voltage $V_{ref}$ is provided as reference value to control unit 30.

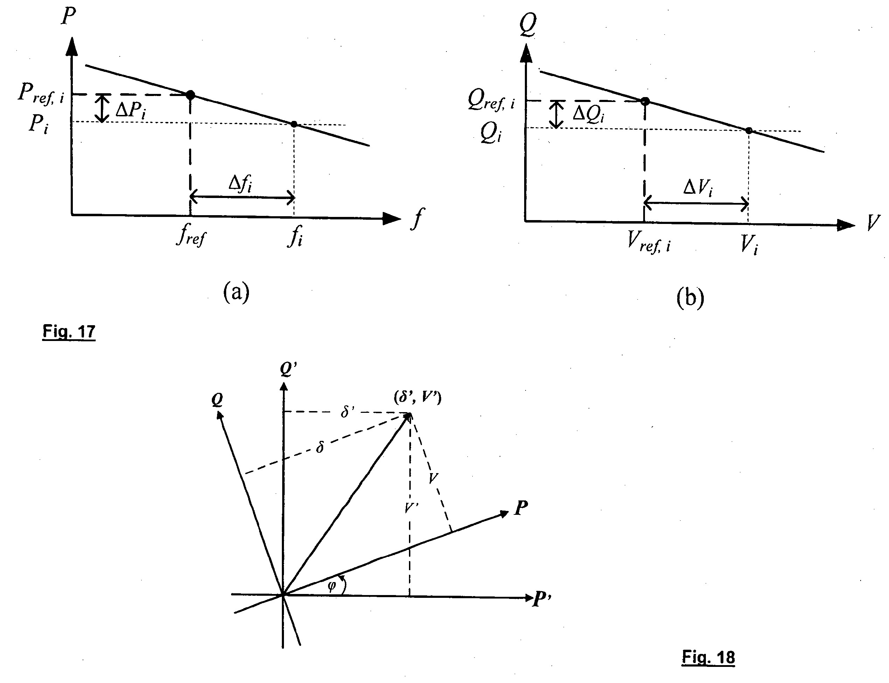

Fig. 17 shows the traditional active and reactive power droop control relation.

However, as mentioned, the conventional droop functions cannot be used efficiently when applied in MV and LV networks. The new droop control is also needed for power electronic inverters and synchronous generators in grid supporting mode.

When the relation between the real and imaginary part of the grid impedance changes, this will lead to the change in the relation between frequency $f_i$ (voltage angle $\delta$) and active power $P_i$ as well as the relation between the magnitude of the voltage $V_i$ and reactive power $Q_i$. To describe the relation of active and reactive power $P_i$, $Q_i$ on

frequency $f_i$ and voltage $V_i$, the rotation transformation of the plane can be used to interpret in a mathematical way, see Fig. 18 which shows two different reference frames, namely the $P'Q'$-coordinate system and the $PQ$-coordinate system. The $PQ$-coordinate plane rotates by a counterclockwise rotating angle $\varphi$ in the unrotated $P'Q'$-coordinate system. The position of $\delta'$ and $V'$ values in the unrotated $P'Q'$-coordinate system, in terms of $\delta$ and $V$ values in the rotated $PQ$-coordinate system, has to be considered. The $\delta'$ and $V'$ can be written as functions of rotating angle $\varphi$, voltage angle $\delta$ and voltage $V$ in the following general form:

$$\delta' = f_1\left(\delta, V, \varphi\right) \qquad \text{Eq. 31}$$

$$V' = f_2\left(\delta, V, \varphi\right) \qquad \text{Eq. 32}$$

In Eq. 31 and Eq. 32, the voltage angle $\delta$ and voltage $V$ are stated in the $PQ$-rotated coordinate plane while the new voltage angle $\delta'$ and the new voltage $V'$ are stated in the $P'Q'$-unrotated coordinate plane. The relation between the impedance of the grid tied point of each unit can be implemented into the droop control for dynamic power and load sharing. The conventional droop control of grid supporting mode E in Eq. 29 and Eq. 30 can be adapted based on the rotation transformation to get a new droop control, which is related to the change of the grid impedance. The new active and reactive power droop control (grid supporting case) of the rotated coordinate system in respect to the unrotated coordinate system for generating unit $i$ can be rewritten in general as:

$$\left(P_{ref,i} - P_i\right) = \frac{1}{K_{f,i}} \cdot \left(f'_{ref} - f'_{,i}\right) \qquad \text{Eq. 33}$$

$$\left(Q_{ref,i} - Q_i\right) = \frac{1}{K_{V,i}} \cdot \left(V'_{ref,i} - V'_{,i}\right) \qquad \text{Eq. 34}$$

In terms of the dynamic system description, in Eq. 33 and Eq. 34, $P_{ref,i}$ is the reference active power of the generating unit $i$, $P_i$ is the active power output in the tied point of the generating unit $i$. $K_{f,i}$ is frequency droop factor of generating unit $i$. $Q_{ref,i}$ is the reference reactive power of generating unit $i$. $Q_i$ is the reactive power output of generating unit $i$. $K_{V,i}$ is voltage droop factor of generating unit $i$. $f'_{ref}$ and $V'_{ref,i}$ are the projected reference frequency and voltage of generating unit $i$ from rotated plane in respect to the unrotated coordinated system respectively. $f'_i$ and $V'_i$ are the projected frequency and voltage of generating unit $i$ from rotated plane in respect to the unrotated coordinated system respectively.

Regarding the Eq. 33 and Eq. 34, $f'$ represented for $\delta'$ and $V'$, are stated in unrotated coordinated system, can be derived in the terms of rotating angle $\varphi$, voltage angle $\delta$ and voltage $V$ as follows.

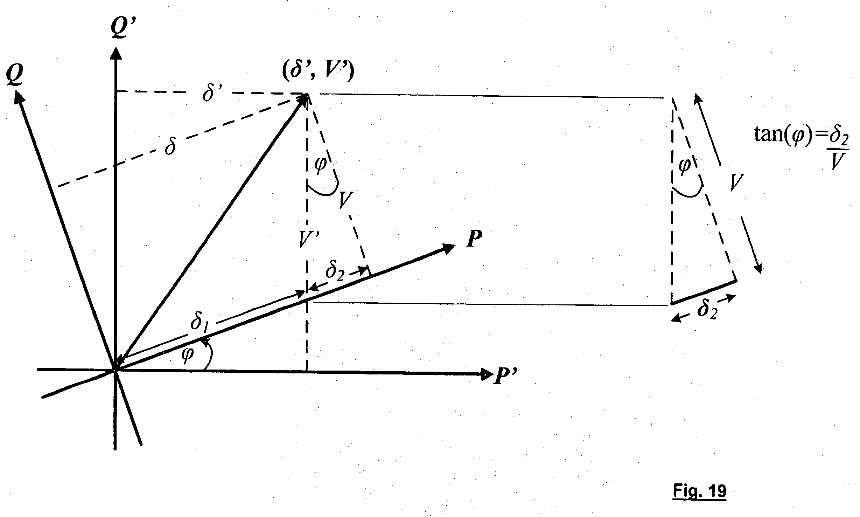

To derive $\delta'$ in the terms of $\varphi$, $\delta$ and $V$, variables $\delta_1$ and $\delta_2$ are assumed as shown in Fig. 19. The general equation of voltage angle in rotated $PQ$-coordinate system can be expressed as:

$$\delta_1 = \delta - \delta_2 \qquad \text{Eq. 35}$$

where $\delta_2 = V \tan(\varphi)$ as shown in Fig. 19, this leads to

$$\delta_1 = \delta - V \tan\left(\varphi\right) \qquad \text{Eq. 36}$$

Eq. 36 multiplied with $\cos(\varphi)$ gives

$$\delta_1 \cos(\varphi) = \delta \cos(\varphi) - V \tan(\varphi)\cos(\varphi)$$

$$= \delta \cos(\varphi) - V \frac{\sin(\varphi)}{\cos(\varphi)} \cos(\varphi) \qquad \text{Eq. 37}$$

$$= \delta \cos(\varphi) - V \sin(\varphi)$$

Eq. 37 are substituted by $\delta_1 \cos(\varphi) = \delta'$, this leads to

$$\delta' = \delta \cos(\varphi) - V \sin(\varphi) \qquad \text{Eq. 38}$$

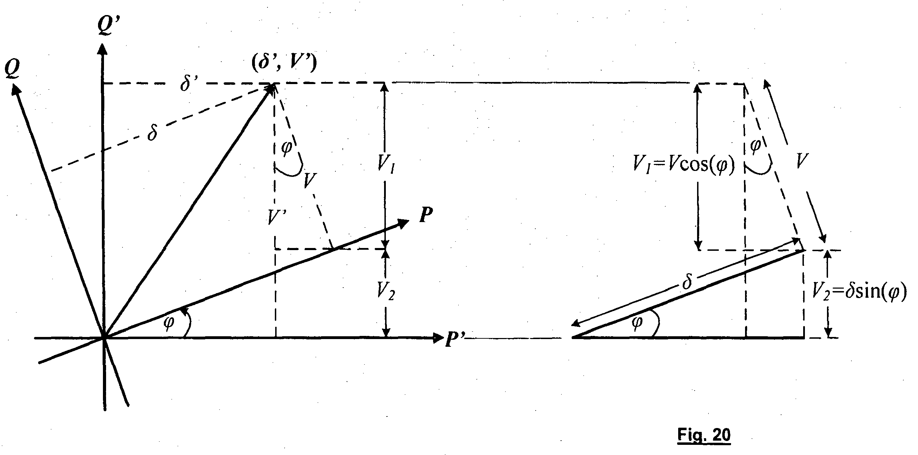

To derive $V'$ in the terms of $\varphi$, $\delta$ and $V$, variables $V_1$ and $V_2$ are assumed as shown in Fig. 20. The general equation of reactive power in rotated *PQ*-coordinate system can be expressed as:

$$V' = V_1 + V_2 \qquad \text{Eq. 39}$$

where $V_1 = V \cos(\varphi)$ and $V_2 = \delta \sin(\varphi)$ as shown in Fig. 20, this leads to

$$V' = V \cos(\varphi) + \delta \sin(\varphi) \qquad \text{Eq. 40}$$

Therefore, new voltage angle $\delta'$ and voltage $V'$ can be also modified by rotation transformation matrix based on Eq. 38 and Eq. 40 as follows:

$$\begin{bmatrix} \delta' \\ V' \end{bmatrix} = \begin{bmatrix} \cos\varphi & -\sin\varphi \\ \sin\varphi & \cos\varphi \end{bmatrix} \begin{bmatrix} \delta \\ V \end{bmatrix} \qquad \text{Eq. 41}$$

The substitute of the Eq. 22 and Eq. 23 in the rotation matrix (Eq. 41) leads to the general relation:

$$\begin{bmatrix} \delta' \\ V' \end{bmatrix} = \begin{bmatrix} \dfrac{X}{|Z|} & -\dfrac{R}{|Z|} \\ \dfrac{R}{|Z|} & \dfrac{X}{|Z|} \end{bmatrix} \begin{bmatrix} \delta \\ V \end{bmatrix} \qquad \text{Eq. 42}$$

This matrix equation Eq. 42 describes the relation between voltage angle $\delta$ and voltage $V$ regarding the impedance $Z$ of the grid tied point of the individual power unit. For both inductive and resistive nature, the resistance $R$ and reactance $X$ related to the gate impedance $Z$ of the grid tied point of the generating unit are taken into consideration: it leads to the general relation between voltage angle $\delta$ and voltage $V$:

$$\delta' = \left(\frac{X}{|Z|}\right)\delta - \left(\frac{R}{|Z|}\right)V \qquad \text{Eq. 43}$$

$$V' = \left(\frac{R}{|Z|}\right)\delta + \left(\frac{X}{|Z|}\right)V \qquad \text{Eq. 44}$$

The relation between the impedance $Z_i$ of the grid tied point of each unit $i$ can be implemented into the droop control for load sharing as described in Eq. 33 and Eq. 34. Eq. 42, as mentioned, in the dynamic system behavior, the voltage angle $\delta$ is related to the frequency $f$ of the grid. This means, changes in the voltage angle $\delta$ can only be effected by changes in the frequency $f$. Therefore, in combination of Eq. 33, Eq. 34, Eq. 43, Eq. 44, the new active power droop control for a generating unit $i$ in grid supporting mode can be described in a mathematical equation as:

$$\left(P_{ref,i} - P_i\right) = \frac{1}{K_{f,i}} \cdot \left(f_{ref}' - f_i'\right)$$

$$= \frac{1}{K_{f,i}} \cdot \left(\left(\left(\frac{X_i}{|Z_i|}\right)f_{ref} - \left(\frac{R_i}{|Z_i|}\right)V_{ref,i}\right) - \left(\left(\frac{X_i}{|Z_i|}\right)f_i - \left(\frac{R_i}{|Z_i|}\right)V_i\right)\right)$$

$$= \frac{1}{K_{f,i}} \cdot \left(\left(\frac{X_i}{|Z_i|}\right)f_{ref} - \left(\frac{X_i}{|Z_i|}\right)f_i - \left(\frac{R_i}{|Z_i|}\right)V_{ref,i} + \left(\frac{R_i}{|Z_i|}\right)V_i\right)$$

$$= \frac{1}{K_{f,i}} \cdot \left(\frac{X_i}{|Z_i|}\right)\left(f_{ref} - f_i\right) - \frac{1}{K_{f,i}} \cdot \left(\frac{R_i}{|Z_i|}\right)\left(V_{ref,i} - V_i\right)$$

$$\text{Eq. 45}$$

And a new reactive power droop control for a generating unit $i$ in grid supporting mode can be described in a mathematical equation as:

$$\left(Q_{ref,i} - Q_i\right) = \frac{1}{K_{V,i}} \cdot \left(V'_{ref,i} - V'_i\right)$$

$$= \frac{1}{K_{V,i}} \cdot \left(\left(\left(\frac{R_i}{|Z_i|}\right)f_{ref} + \left(\frac{X_i}{|Z_i|}\right)V_{ref,i}\right) - \left(\left(\frac{R_i}{|Z_i|}\right)f_i + \left(\frac{X_i}{|Z_i|}\right)V_i\right)\right)$$

$$= \frac{1}{K_{V,i}} \cdot \left(\left(\frac{R_i}{|Z_i|}\right)f_{ref} - \left(\frac{R_i}{|Z_i|}\right)f_i + \left(\frac{X_i}{|Z_i|}\right)V_{ref,i} - \left(\frac{X_i}{|Z_i|}\right)V_i\right)$$

$$= \frac{1}{K_{V,i}} \cdot \left(\frac{R_i}{|Z_i|}\right)\left(f_{ref} - f_i\right) + \frac{1}{K_{V,i}} \cdot \left(\frac{X_i}{|Z_i|}\right)\left(V_{ref,i} - V_i\right)$$

$$\text{Eq. 46}$$

In terms of the dynamic system description, in Eq. 45 and Eq. 46, $f_{ref}$ is the reference frequency, e.g. 50Hz or

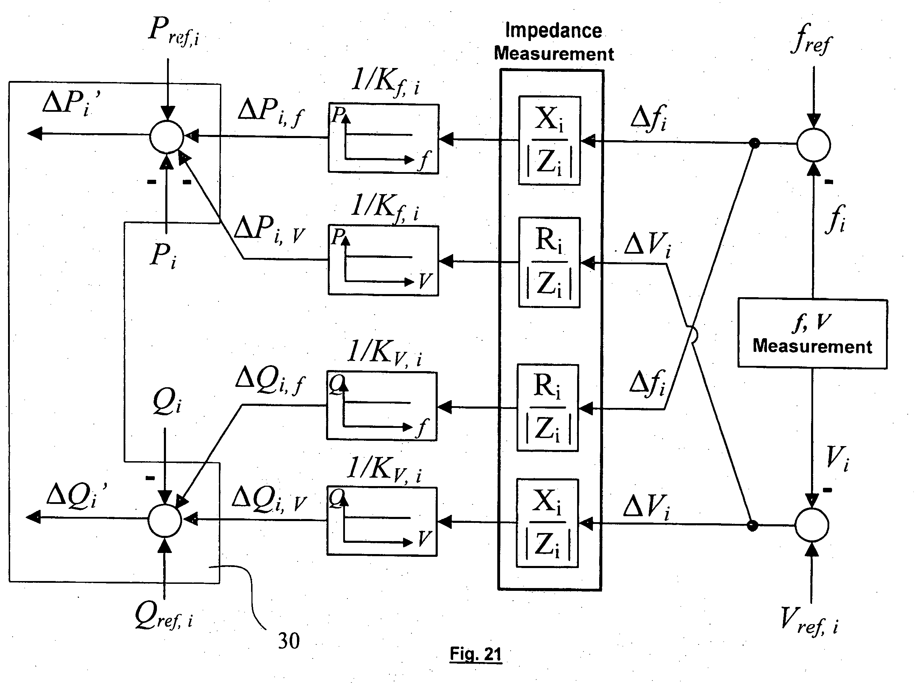

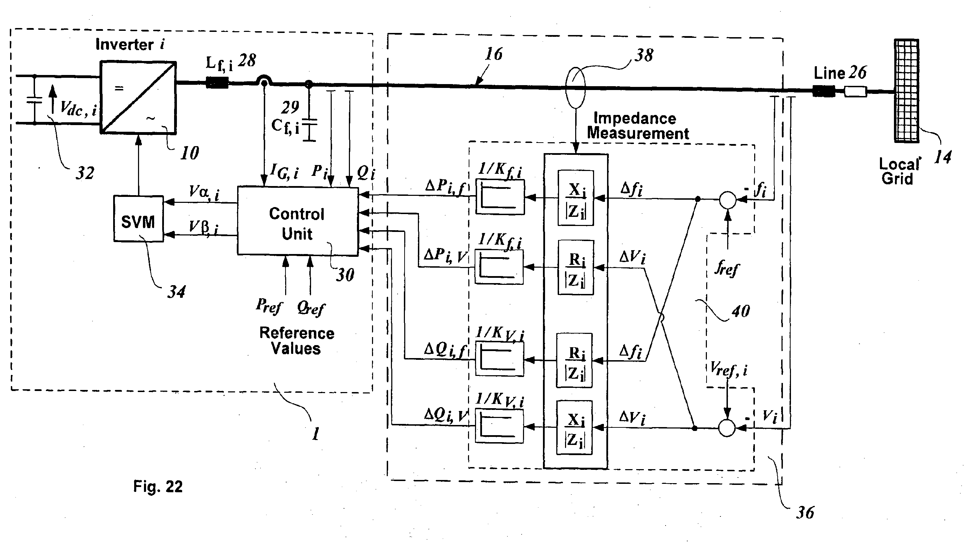

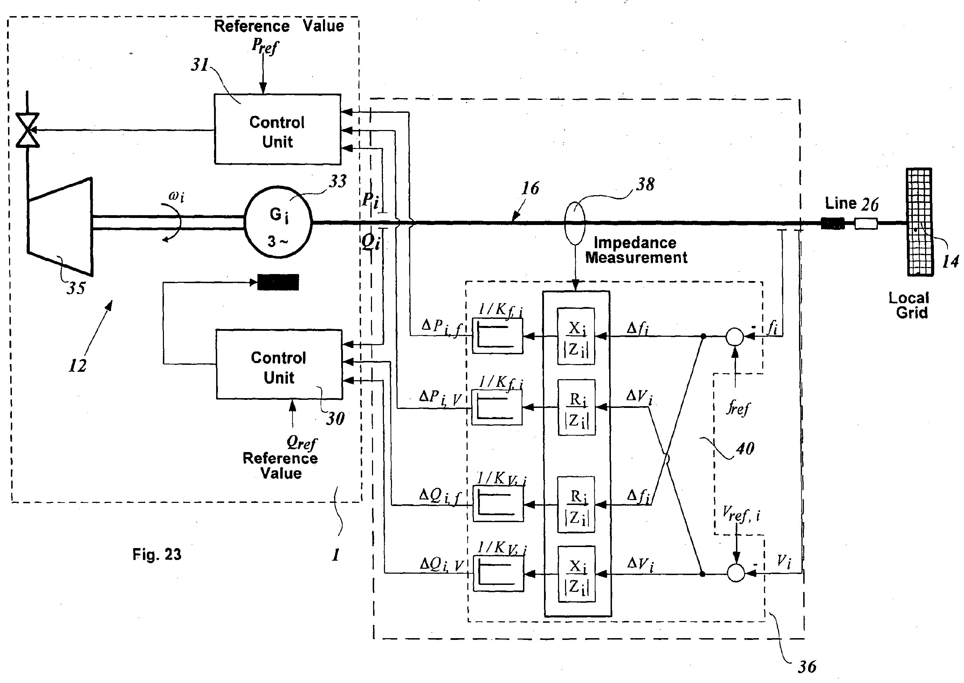

60Hz, $f_i$ is the actual system frequency in the tied point of the generating unit $i$. $K_{f,i}$ is frequency droop factor of generating unit $i$. $P_{ref,i}$ is the reference active power the generating unit $i$ shall provide. $P_i$ is the actual active power output of generating unit $i$. $V_{ref,i}$ is the reference voltage the generating unit $i$ shall provide. $V_i$ is the voltage of generating unit $i$. $K_{V,i}$ is the voltage droop factor of generating unit $i$. $Q_{ref,i}$ is the reference reactive power the generating unit $i$ shall provide. $Q_i$ is the reactive power output of generating unit $i$. $R_i$ is the resistance in the tied point of the generating unit $i$. $X_i$ is the reactance in the tied point of the generating unit $i$. $|Z_i|$ is the magnitude of impedance in the tied point of the generating unit $i$. The new droop control based on Eq. 45 and Eq.46 can be structured as the control structure diagram of the new droop control for grid supporting mode as shown in Fig. 21. The new droop control in Fig. 21 can be implemented into the general control strategy of grid supporting mode E for the generating unit $i$ (power electronic inverter and synchronous generator) which can be implemented into the control unit 36 in Fig. 6 as shown in Fig. 22 and Fig. 23 respectively.

Fig. 21 schematically shows the method steps of the new active power droop control and the new reactive power droop control each using the relation/ the quotient between the resistance $R_i$ and impedance magnitude $|Z_i|$ and the relation/ the quotient of the reactance $X_i$ and the impedance magnitude $|Z_i|$ for the control of the power generating unit 1. As can be seen the actual system frequency $f_i$ of the unit 1 and its actual voltage $V_i$ are determined, for example by direct measurements in case of the voltage and/ or, as far as the frequency is concerned, by measuring the voltage or current flow at the grid tied point 16 and calculating the frequency from that voltage or current. A reference frequency $f_{ref}$ and reference voltage $V_{ref,i}$ are given. These reference values $f_{ref}$ and $V_{ref,i}$ as well as the measured or calculated actual frequency and voltage values $f_i$ and $V_i$ are input values for the new control unit 36 pursuant to Fig. 6.

From these values the frequency difference $\Delta f_i$ between the actual frequency $f_i$ of the power generating unit 1 and the given reference frequency $f_{ref}$, and the voltage difference $\Delta V_i$ between the actual voltage $V_i$ at the output terminals of the power generating unit 1 and a given reference voltage $V_{ref,I}$ is calculated. Then a first quotient $R_i/|Z_i|$ of the resistance $R_i$ and impedance magnitude $|Z_i|$ and a second quotient $X_i/|Z_i|$ of the reactance $X_i$ and impedance magnitude $|Z_i|$ is used to calculate four products. The calculation of the first and second quotient may be performed at the stage the respective quotient value is needed or previously in an advanced step, so that the value or values can be used later in proceeding steps. It is then calculated a first active power product $\Delta P_{i,f}$ of the frequency difference $\Delta f_i$, the second quotient $X_i/|Z_i|$ and a given active power droop factor $1/K_{f,i}$ that equals the inverted given frequency droop factor $K_{f,i}$. Furthermore, it is calculated a second active power product $\Delta P_{i,V}$ of the voltage difference $\Delta V_i$, the first quotient $R_i/|Z_i|$ and the active power droop factor $(1/K_{f,i})$, a first reactive power product $\Delta Q_{i,f}$ of the frequency difference $\Delta f_i$, the first quotient $R_i/|Z_i|$ and a given reactive power droop factor $1/K_{V,i}$ that equals the inverted given voltage droop factor $K_{f,i}$. Finally, it is calculated a second reactive power product $\Delta Q_{i,V}$ of the voltage difference $\Delta V_i$, the second quotient $X_i/|Z_i|$ and the reactive power droop factor $1/K_{V,i}$. The four products $\Delta P_{i,f}$, $\Delta P_{i,V}$, $\Delta Q_{i,f}$, $\Delta Q_{i,V}$ are provided to control unit 30 controlling the active power $P_i$ and reactive power $Q_i$ output of the power generating unit 1.

Then the sum of the first active power product $\Delta P_{i,f}$ and the negative second active power product $\Delta P_{i,V}$ is calculated to get an active power correction term $\Delta P_{i,f} - \Delta P_{i,V}$ which is subsequently added to the error $P_{ref,i} - P_i$ of the feedback control of the active power $P_i$. This can be done within the new control unit 40 or control unit 30 as shown in Fig. 21 and 22. Furthermore, the sum of the first reactive power product $\Delta Q_{i,f}$ and the second reactive power product $\Delta Q_{i,V}$ is calculated to get a reactive power correction term $\Delta Q_{i,f} + \Delta Q_{i,V}$ which is added to the error $Q_{ref,i} - Q_i$ of the feedback control of the reactive power $Q_i$. This can also be done within the new control unit 40 or control unit 30 as shown in Fig. 21 and 22. As can be seen in Fig. 6 given reference values for active power $P_{ref,i}$ and reactive power $Q_{ref,i}$ are provided to this control unit 30 to execute the frequency and voltage feedback control. Furthermore the measured actual voltage $V_G$ and current $I_G$ are inputted to control unit 30 which calculates the actual active and reactive power $P_i$, $Q_i$ of the power generating unit 1 from these parameters.

Again turning to Fig. 21 the calculation of the sum from the negative actual active power $P_i$, the reference active power $P_{ref,i}$ and the active power correction term $\Delta P_{i,f} - \Delta P_{i,V}$ forms a new active power error $\Delta P_i'$ which is the basis for the feeback control of the active power $P_i$. And the calculation of the sum from the negative actual reactive power $Q_i$, the reference reactive power $Q_{ref,i}$ and reactive power correction term $\Delta Q_{i,f} + \Delta Q_{i,V}$ forms a new reactive power error $\Delta Q_i'$ which is the basis for the feeback control of the reactive power.

Fig. 22 shows a general control of a system operating in grid supporting mode E inverter 10 with new droop control implemented in a new droop control unit 36. The relation between the impedance $Z_i$ of the grid tied point 16 of generating unit 1 is considered for the new droop control. Here the active power $P_i$ and the reactive power $Q_i$ are measured directly. Their values are input values of the control unit 30. When the impedance $Z_i$ of the grid tied point 16 of generating unit 1 changes, this will lead to the change in the relation between frequency $f_i$, active power $P_i$, magnitude of the voltage $V_i$ and reactive power $Q_i$ of generating unit 1. For example, in the case of inductive nature (transmission network), the value of reactance $X_i$ is much higher than resistance $R_i$ ($X_i >> R_i$). Therefore, the relation between reactive power $Q_i$ and system frequency $f_i$ can be neglected as well as the relation between active power $P_i$ and actual voltage $V_i$. On the other hand, in the case of resistive nature (distribution network), the value of reactance $X_i$ is much lower than resistance $R_i$ ($X_i << R_i$). Therefore, the relation between active power $P_i$ and system frequency $f_i$ can be neglected as well as the relation between active power $Q_i$ and actual voltage $V_i$.

In summary, this new droop control strategy can be used and implemented into both inductive and resistive nature of power systems. This is due to the impedance $Z_i$ of the grid tied point 16 of the generating unit 1 being taken into consideration for the dynamic control and sharing/ balancing of power.

Likewise, the new droop control, which is implemented into a synchronous generator 33, is operating the same way as the power electronic inverter 10 in Fig. 22. Fig. 23 shows a general control of a power generating unit 1 operating in grid supporting mode E with an ECS 12 comprising a synchronous generator 33 driven by a turbine 35. The power generating unit 1 is controlled by a first control unit 30 controlling the excitation field winding of the synchronous generator 33, a second control unit 31 controlling at least one valve which controls the rotating frequency $\omega_i$ of the turbine shaft driving the rotor of the synchronous generator 33, and by a third control unit 36 which comprises the new adaptive grid impedance droop control (AGIDC) 40 delivering correction values to the first and the second control unit 30, 31. The relation between the impedance $Z_i$ of the grid tied point 16 of generating unit 6 is implemented into the new droop control unit 36, 40.

The first control unit 30 controls the reactive power output of the synchronous generator 33. The measured actual reactive power $Q_i$ is an input value as well as the third product $\Delta Q_{i,f}$ and the fourth product $\Delta Q_{i,V}$. The second control unit 31 controls the active power output of the synchronous generator 33. The measured actual active power $P_i$ is an input value as well as the first product $\Delta P_{i,f}$ and the second product $\Delta P_{i,V}$.

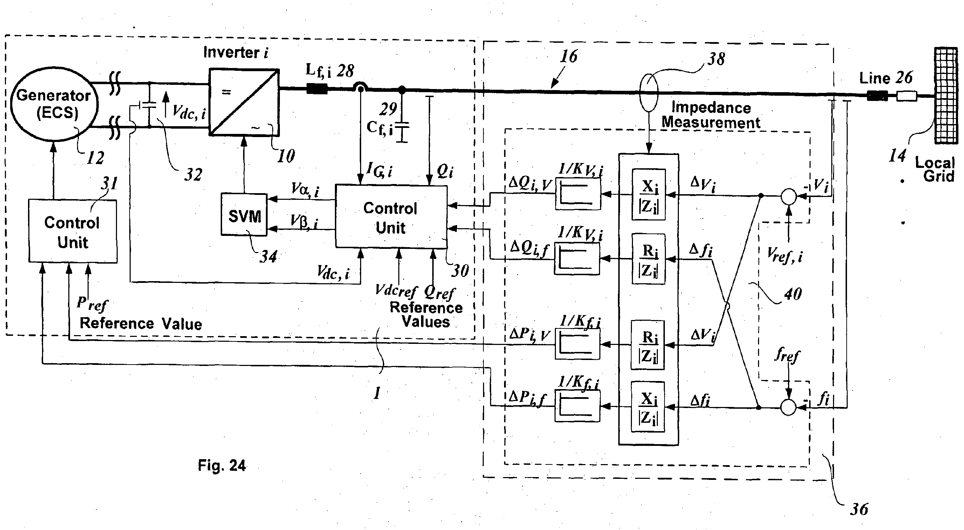

In the case of an inverter in ECS-driven feeding mode A (grid parallel mode C), from the control point of view, in the transmission networks with an inductive behavior, the active power $P$ is related to the system frequency. The reactive power $Q$ is related to the voltage. This will lead to the basic traditional active and reactive power droop control of conventional power systems, which is similar to the grid supporting case E. Therefore, the proposed developed general AGIDC in combination with a gate impedance measurement that is used in grid supporting mode E can be applied into grid parallel mode C as well. The inverter 10 in ECS-driven feeding mode A (grid parallel mode C) requires a reactive power sharing control from the grid side and the active power control from the ECS side. As the proposed developed AGIDC is general and adaptable, the new droop control in Fig. 21 can be implemented into the general control strategy of grid parallel mode C for the generating unit 1 (power electronic inverter) as shown in Fig. 24. For the new droop control of the synchronous generator in grid parallel case C, the active power control is also related to the ECS 12 side.

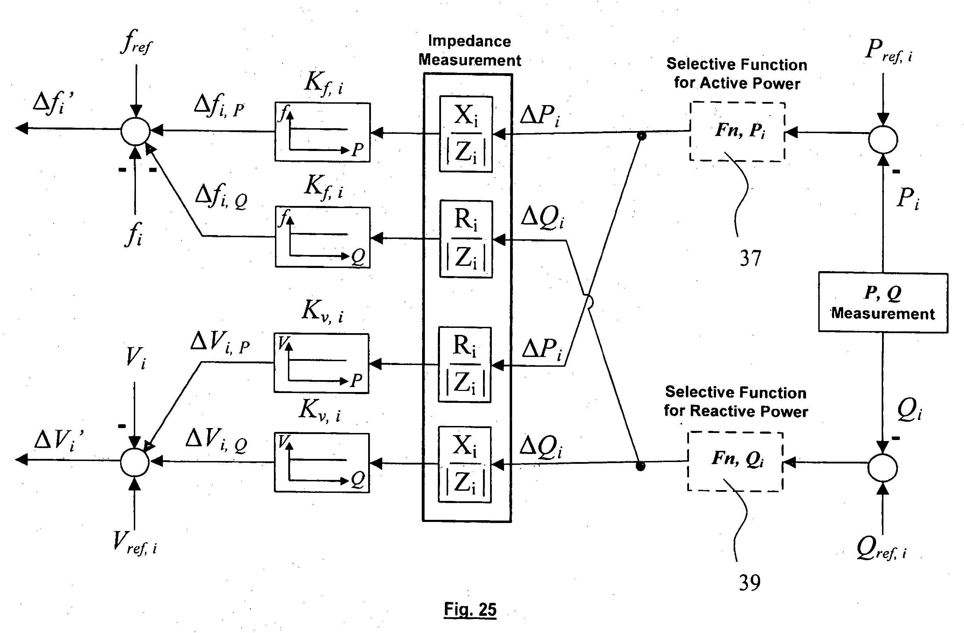

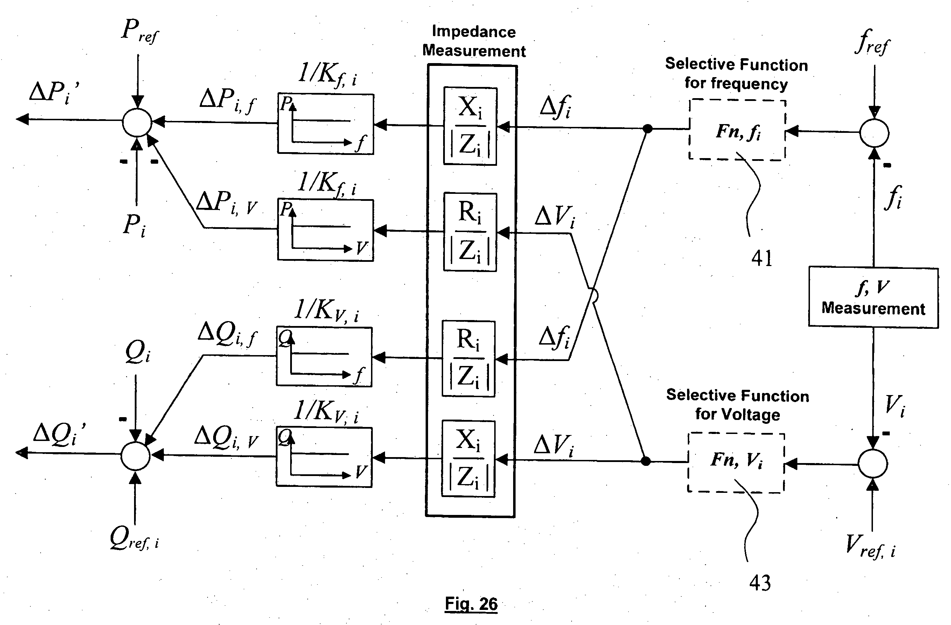

Moreover, for further requirement of future power systems, the proposed AGIDC can be extended with additional selective functions 37, 39 for all feeding modes. Such additional selective function may be non-linear functions, dead band functions or saturation functions like hysteresis or band gap functions which can limit or filter, in particular disregard or differently weighting, certain areas in the complex coordinate plane. Fig. 25 shows new droop control diagram in grid forming mode D with an additional selective function 37 for active power control and an additional selective function 39 for reactive power control for the generating unit 1 (power electronic inverter or synchronous generator). Fig. 26 shows new droop control diagram for grid supporting mode E and grid parallel mode C with an additional selective function 41 for frequency control and an additional selective function 43 for voltage control for the generating unit 1 (power electronic inverter or synchronous generator).

In summary, the proposed innovative control (general AGIDC in combination with gate impedance measurement) is a sharing and power balancing control which can be used and implemented for power generating units in any voltage level, EHV, HV, MV or LV. The proposed innovative control method according to the invention considers the individual impedance $\underline{Z_i}$ of the grid tied point 16 of each generating unit 1. This means that the changes in current $I_i$ and voltage $V_i$ values at measurement grid tied point 16 which results by unknown lines, load variation and disturbances are taken into account for adaptive power sharing and balancing amongst the individual power generating units. The proposed general "AGIDC" for decentralized power supply systems 1 offers the opportunity to bring together the decentralized and centralized power supply systems in compatible coexistence.

## Claims

1. Method for actively controlling in a feedback control at least one output parameter ($f_i$, $V_i$, $P_i$, $Q_i$) of a decentralized power generating unit (1) feeding power into a power supply grid (14) having a plurality of such decentralized power generating units, the power generating unit (1) being coupled to the grid (14) at a grid tied point (16), **characterized in that** the actual resistance ($R_i$), reactance ($X_i$) and magnitude ($|Z_i|$) of the impedance ($Z_i$) of the power generating unit (1) at the tied point (16) is determined and a first quotient ($R_i/|Z_i|$) between the resistance ($R_i$) and impedance magnitude ($|Z_i|$) and a second quotient ($X_i/|Z_i|$) between the reactance ($X_i$) and the impedance magnitude ($|Z_i|$) is calculated and used for the feedback control of the at least one output parameter ($f_i$, $V_i$, $P_i$, $Q_i$).

2. Method according to claim 1, **characterized in that** the controlled output parameter is the frequency ($f_i$) of the power generating unit (1) and that the method comprises the steps of:

- determining the actual active power ($P_i$) and reactive power ($Q_i$) of the power generating unit (1) that are fed into the grid (14) at the grid tied point (16),
- calculating the active power difference ($\Delta P_i$) between the actual active power ($P_i$) delivered from the power generating unit (1) and a given reference active power ($P_{ref,i}$),
- calculating the reactive power difference ($\Delta Q_i$) between the actual active power ($Q_i$) delivered from the power generating unit (1) and a given reference active power ($Q_{ref,i}$),
- using the second quotient ($X_i/|Z_i|$) to calculate a first frequency product ($\Delta f_{i,P}$) of the active power difference ($\Delta P_i$), the second quotient ($X_i/|Z_i|$) and a given frequency droop factor ($K_{f,i}$),
- using the first quotient ($R_i/|Z_i|$) to calculate a second frequency product ($\Delta f_{i,Q}$) of the reactive power difference ($\Delta Q_i$), the first quotient ($R_i/|Z_i|$) and the frequency droop factor ($K_{f,i}$), and
- calculating the sum of the first ($\Delta f_{i,P}$) and the negative second frequency product ($\Delta f_{i,Q}$) to get a frequency correction term ($\Delta f_{i,P}$) - ($\Delta f_{i,Q}$) which is added to the error ($f_{ref}$ - $f_i$) of the feedback control of the frequency ($f_i$).

3. Method according to claim 1 or 2, **characterized in that** the controlled output parameter is the voltage ($V_i$) of the power generating unit (1) and that the method comprises the steps of:

- determining the actual active power ($P_i$) and reactive power ($Q_i$) of the power generating unit (1) that are fed into the grid (14) at the grid tied point (16),
- calculating the active power difference ($\Delta P_i$) between the actual active power ($P_i$) delivered from the power generating unit (1) and a given reference active power ($P_{ref,i}$),
- calculating the reactive power difference ($\Delta Q_i$) between the actual active power ($Q_i$) delivered from the power generating unit (1) and a given reference active power ($Q_{ref,i}$),
- using the first quotient ($R_i/|Z_i|$) to calculate a first voltage product ($\Delta V_{i,P}$) of the active power difference ($\Delta P_i$), the first quotient ($R_i/|Z_i|$) and a given voltage droop factor ($K_{V,i}$),
- using the second quotient ($X_i/|Z_i|$) to calculate a second voltage product ($\Delta V_{i,Q}$) of the reactive power difference ($\Delta Q_i$), the second quotient ($X_i/|Z_i|$) and the voltage droop factor ($K_{V,i}$), and
- calculating the sum of the first ($\Delta V_{i,P}$) and the second voltage product ($\Delta V_{i,Q}$) to get a voltage correction term ($\Delta V_{i,P} + \Delta V_{i,Q}$) which is added to the error ($V_{ref,i}$ - $V_i$) of the feedback control of the voltage ($V_i$).

4. Method according to claim 1, 2 or 3, **characterized in that** the controlled output parameter is the active power ($P_i$) of the power generating unit (1) and that the method comprises the steps of:

- determining the actual frequency ($f_i$) and voltage ($V_i$) of the power generating unit (1) at the grid tied point (16),
- calculating the frequency difference ($\Delta f_i$) between the actual frequency ($f_i$) of the power generating unit (1) and a given reference frequency ($f_{ref}$),
- calculating the voltage difference ($\Delta V_i$) between the actual voltage ($V_i$) of the power generating unit (1) and a given reference voltage ($V_{ref,i}$),
- using the second quotient ($X_i/|Z_i|$) to calculate a first active power product ($\Delta P_{i,f}$) of the frequency difference ($\Delta f_i$), the second quotient ($X_i/|Z_i|$) and a given active power droop factor ($1/K_{f,i}$),
- using the first quotient ($R_i/|Z_i|$) to calculate a second active power product ($\Delta P_{i,V}$) of the voltage difference ($\Delta V_i$), the first quotient ($R_i/|Z_i|$) and the active power droop factor ($1/K_{f,i}$), and
- calculating the sum of the first ($\Delta P_{i,f}$) and the negative second active power product ($\Delta P_{i,V}$) to get an active power correction term ($\Delta P_{i,f} + \Delta P_{i,V}$) which is added to the error ($P_{ref,i}$ - $P_i$) of the feedback control of the active power ($P_i$).

5. Method according to one of the foregoing claims, **characterized in that** the controlled output parameter is the reactive power ($Q_i$) of the power generating unit (1) and that the method comprises the steps of:

- determining the actual frequency ($f_i$) and voltage ($V_i$) of the power generating unit (1) at the grid tied point (16),
- calculating the frequency difference ($\Delta f_i$) between the actual frequency ($f_i$) of the power generating unit (1) and a given reference frequency ($f_{ref}$),
- calculating the voltage difference ($\Delta V_i$) between the actual voltage ($V_i$) of the power generating unit (1) and a given reference voltage ($V_{ref,i}$),
- using the first quotient ($R_i/|Z_i|$) to calculate a first reactive power product ($\Delta Q_{i,f}$) of the frequency difference ($\Delta f_i$), the first quotient ($R_i/|Z_i|$) and a given reactive power droop factor ($1/K_{V,i}$),
- using the second quotient ($X_i/|Z_i|$) to calculate a second reactive power product ($\Delta Q_{i,V}$) of the voltage difference ($\Delta V_i$), the second quotient ($X_i/|Z_i|$) and the reactive power droop factor ($1/K_{V,i}$), and
- calculating the sum of the first ($\Delta Q_{i,f}$) and the second reactive power product ($\Delta Q_{i,V}$) to get a reactive power

correction term $(\Delta Q_{i,f}) + (\Delta Q_{i,V})$ which is added to the error $(Q_{ref,i}) - Q_i)$ of the feedback control of the reactive power $(Q_i)$.

6. Method according to claim 4, **characterized in that** the active power droop factor $(1/K_{f,i})$ equals the inverted value of the frequency droop factor $(1/K_{f,i})$.

7. Method according to claim 5, **characterized in that** the reactive power droop factor $(1/K_{V,i})$ equals the inverted value of the voltage droop factor $(1/K_{V,i})$.

8. Method according to one of the foregoing claims, **characterized in that** frequency $(f_i)$ and the voltage $(V_i)$ or the active power $(P_i)$ and the reactive power $(Q_i)$ of each decentralized power generating unit (1) of the grid (14) is controlled using the first quotient $(R_i/|Z_i|)$ and the second quotient $(X_i/|Z_i|)$ for the respective feedback control of the parameters $(f_i, V_i, or P_i, Q_i)$.

9. Method according to claim 2, 3 or 8, **characterized in that** the active power difference $(\Delta P_i)$ is filtered by a selective function (37) before it is used for calculating a product $(\Delta f_{i,P}, \Delta V_{i,P})$.

10. Method according to claim 2, 3, 8 or 9, **characterized in that** the reactive power difference $(\Delta Q_i)$ is filtered by a selective function (39) before it is used for calculating a product $(\Delta f_{i,Q}, \Delta V_{i,Q})$.

11. Method according to claim 4, 5, or 8, **characterized in that** the freqeuncy difference $(\Delta f_i)$ is filtered by a selective function (41) before it is used for calculating a product $(\Delta P_{i,f}, \Delta Q_{i,f})$.

12. Method according to claim 4, 5, or 8, **characterized in that** the voltage difference $(\Delta V_i)$ is filtered by a selective function (43) before it is used for calculating a product $(\Delta P_{i,V}, \Delta Q_{i,V})$.

13. Use of the method according to one of the claims 1 to 12, **characterized in that** the method is implemented in a power generating unit (1) for any voltage level, in particular extra high voltage (EHV), high voltage (HV), medium voltage (MV) or low voltage (LV).

14. Use of the method according to one of the foregoing claims 1 to 12, **characterized in that** the method is implemented into a power system with inductive or resistive nature.

15. Use of the method according to one of the foregoing claims 1 to 12, **characterized in that** the method is implemented into the control of a synchronous motor (12) or an inverter (10).

16. Use of the method according to one of the foregoing claims 1 to 12, **characterized in that** the method is implemented into the control of a one phase or three phase inverter (10).

**Patentansprüche**

1. Verfahren zur aktiven Steuerung, in einer Rückführungsregelung, wenigstens eines Ausgangsparameters $(f_i, V_i, P_i, Q_i)$ einer dezentralisierten Energieerzeugungseinheit (1), die Energie in ein Energieversorgungsnetz (14) einspeist, das mehrere solche dezentralisierte Energieerzeugungseinheiten aufweist, wobei die Energieerzeugungseinheit (1) mit dem Netz (14) an einem netzgebundenen Punkt (16) gekoppelt ist, **dadurch gekennzeichnet, dass** der aktuelle Widerstand $(R_i)$, Blindwiderstand $(X_i)$ und absolute Betrag $(|Z_i|)$ der Impedanz $(Z_i)$ der Energieerzeugungseinheit (1) an dem gebundenen Punkt (16) bestimmt werden und ein erster Quotient $(R_i/|Z_i|)$ des Widerstands $(R_i)$ und des Betrages $(|Z_i|)$ der Impedanz und ein zweiter Quotient $(X_i/|Z_i|)$ des Blindwiderstands $(X_i)$ und des Betrages $(|Z_i|)$ der Impedanz berechnet werden und für die Rückführungsregelung des wenigstens einen Ausgangsparameters $(f_i, V_i, P_i, Q_i)$ verwendet werden.

2. Verfahren nach Anspruch 1, **dadurch gekennzeichnet, dass** der gesteuerte Ausgangsparameter die Frequenz $(f_i)$ der Energieerzeugungseinheit (1) ist, und dass das Verfahren die folgenden Schritte aufweist:

   - Bestimmen der aktuellen Wirkleistung $(P_i)$ und Blindleistung $(Q_i)$ der Energieerzeugungseinheit (1), welche in das Netz (14) an dem netzgebundenen Punkt (16) eingespeist werden,
   - Berechnen der Wirkleistungsdifferenz $(\Delta P_i)$ zwischen der aktuellen Wirkleistung $(P_i)$, die von der Energieer-

zeugungseinheit (1) geliefert wird, und einer gegebenen Bezugs-Wirkleistung ($P_{ref,i}$),
- Berechnen der Blindleistungsdifferenz ($\Delta Q_i$) zwischen der aktuellen Wirkleistung ($Q_i$), die von der Energieerzeugungseinheit (1) geliefert wird, und einer gegebenen Bezugs-Wirkleistung ($Q_{ref,i}$),
- Verwenden des zweiten Quotienten ($X_i/|Z_i|$), um ein erstes Frequenzprodukt ($\Delta f_{i,P}$) der Wirkleistungsdifferenz $\Delta P_i$), des zweiten Quotienten ($X_i/|Z_i|$) und eines gegebenen Frequenz-Statikfaktors ($K_{f,i}$) zu berechnen,
- Verwenden des ersten Quotienten ($R_i/|Z_i|$), um ein zweites Frequenzprodukt ($\Delta f_{i,Q}$) der Blindleistungsdifferenz ($\Delta Q_i$), des ersten Quotienten ($R_i/|Z_i|$) und des Frequenz-Statikfaktors ($K_{f,i}$) zu berechnen, und
- Berechnen der Summe des ersten ($\Delta f_{i,P}$) und des negativen zweiten Frequenzprodukts ($\Delta f_{i,Q}$), um einen Frequenzkorrekturterm ($\Delta f_{i,P} - \Delta f_{i,Q}$) zu erhalten, welcher zu dem Fehler ($f_{ref} - f_i$) der Rückführungsregelung der Frequenz ($f_i$) addiert wird.

3.  Verfahren nach Anspruch 1 oder 2, **dadurch gekennzeichnet, dass** der gesteuerte Ausgangsparameter die Spannung ($V_i$) der Energieerzeugungseinheit (1) ist, und dass das Verfahren die folgenden Schritte aufweist:

- Bestimmen der aktuellen Wirkleistung ($P_i$) und Blindleistung ($Q_i$) der Energieerzeugungseinheit (1), welche in das Netz (14) an dem netzgebundenen Punkt (16) eingespeist werden,
- Berechnen der Wirkleistungsdifferenz ($\Delta P_i$) zwischen der aktuellen Wirkleistung ($P_i$), die von der Energieerzeugungseinheit (1) geliefert wird, und einer gegebenen Bezugs-Wirkleistung ($P_{ref,i}$),
- Berechnen der Blindleistungsdifferenz ($\Delta Q_i$) zwischen der aktuellen Wirkleistung ($Q_i$), die von der Energieerzeugungseinheit (1) geliefert wird, und einer gegebenen Bezugs-Wirkleistung ($Q_{ref,i}$),
- Verwenden des ersten Quotienten ($R_i/|Z_i|$), um ein erstes Spannungsprodukt ($\Delta V_{i,P}$) der Wirkleistungsdifferenz ($\Delta P_i$), des ersten Quotienten ($R_i/|Z_i|$) und eines gegebenen Spannungs-Statikfaktors ($K_{V,i}$) zu berechnen,
- Verwenden des zweiten Quotienten ($X_i/|Z_i|$), um ein zweites Spannungsprodukt ($\Delta V_{i,Q}$) der Blindleistungsdifferenz ($\Delta Q_i$), des zweiten Quotienten ($X_i/|Z_i|$) und des Spannungs-Statikfaktors ($K_{V,i}$) zu berechnen, und
- Berechnen der Summe des ersten ($\Delta V_{i,P}$) und des zweiten Spannungsprodukts ($\Delta V_{i,Q}$), um einen Spannungskorrekturterm ($\Delta V_{i,P} + \Delta V_{i,Q}$) zu erhalten, welcher zu dem Fehler ($V_{ref} - V_i$) der Rückführungsregelung der Spannung ($V_i$) addiert wird.

4.  Verfahren nach Anspruch 1, 2 oder 3, **dadurch gekennzeichnet, dass** der gesteuerte Ausgangsparameter die Wirkleistung ($P_i$) der Energieerzeugungseinheit (1) ist, und dass das Verfahren die folgenden Schritte aufweist:

- Bestimmen der aktuellen Frequenz ($f_i$) und Spannung ($V_i$) der Energieerzeugungseinheit (1) an dem netzgebundenen Punkt (16),
- Berechnen der Frequenzdifferenz ($\Delta f_i$) zwischen der aktuellen Frequenz ($f_i$) der Energieerzeugungseinheit (1) und einer gegebenen Bezugsfrequenz ($f_{ref}$),
- Berechnen der Spannungsdifferenz ($\Delta V_i$) zwischen der aktuellen Spannung ($V_i$) der Energieerzeugungseinheit (1) und einer gegebenen Bezugsspannung ($V_{ref,i}$),
- Verwenden des zweiten Quotienten ($X_i/|Z_i|$), um ein erstes Wirkleistungsprodukt ($\Delta P_{i,f}$) der Frequenzdifferenz ($\Delta f_i$), des zweiten Quotienten ($X_i/|Z_i|$) und eines gegebenen Wirkleistungs-Statikfaktors ($1/K_{f,i}$) zu berechnen,
- Verwenden des ersten Quotienten ($R_i/|Z_i|$), um ein zweites Wirkleistungsprodukt ($\Delta P_{i,V}$) der Spannungsdifferenz ($\Delta V_i$), des ersten Quotienten ($R_i/|Z_i|$) und des Wirkleistungs-Statikfaktors ($1/K_{f,i}$) zu berechnen, und
- Berechnen der Summe des ersten ($\Delta P_{i,f}$) und des negativen zweiten Wirkleistungsprodukts ($\Delta P_{i,V}$), um einen Wirkleistungskorrekturterm ($\Delta P_{i,f} + \Delta P_{i,V}$) zu erhalten, welcher zu dem Fehler ($P_{ref,i} - P_i$) der Rückführungsregelung der Wirkleistung ($P_i$) addiert wird.

5.  Verfahren nach einem der vorhergehenden Ansprüche, **dadurch gekennzeichnet, dass** der gesteuerte Ausgangsparameter die Blindleistung ($Q_i$) der Energieerzeugungseinheit (1) ist, und dass das Verfahren die folgenden Schritte aufweist:

- Bestimmen der aktuellen Frequenz ($f_i$) und Spannung ($V_i$) der Energieerzeugungseinheit (1) an dem netzgebundenen Punkt (16),
- Berechnen der Frequenzdifferenz ($\Delta f_i$) zwischen der aktuellen Frequenz ($f_i$) der Energieerzeugungseinheit (1) und einer gegebenen Bezugsfrequenz ($f_{ref}$),
- Berechnen der Spannungsdifferenz ($\Delta V_i$) zwischen der aktuellen Spannung ($V_i$) der Energieerzeugungseinheit (1) und einer gegebenen Bezugsspannung ($V_{ref,i}$),
- Verwenden des ersten Quotienten ($R_i/|Z_i|$), um ein erstes Blindleistungsprodukt ($\Delta Q_{i,f}$) der Frequenzdifferenz ($\Delta f_i$), des ersten Quotienten ($R_i/|Z_i|$) und eines gegebenen Blindleistungs-Statikfaktors ($1/K_{V,i}$) zu berechnen,
- Verwenden des zweiten Quotienten ($X_i/|Z_i|$), um ein zweites Blindleistungsprodukt ($\Delta Q_{i,V}$) der Spannungsdif-

ferenz ($\Delta V_i$), des zweiten Quotienten ($X_i/|Z_i|$) und des Blindleistungs-Statikfaktors ($1/K_{V,i}$) zu berechnen, und
- Berechnen der Summe des ersten ($\Delta Q_{i,f}$) und des zweiten Blindleistungsprodukts ($\Delta Q_{i,v}$), um einen Blindleistungskorrekturterm ($\Delta Q_{i,f} + \Delta Q_{i,v}$) zu erhalten, welcher zu dem Fehler ($Q_{ref,i} - Q_i$) der Rückführungsregelung der Blindleistung ($Q_i$) addiert wird.

6. Verfahren nach Anspruch 4, **dadurch gekennzeichnet, dass** der Wirkleistungs-Statikfaktor ($1/K_{f,i}$) gleich dem reziproken Wert des Frequenz-Statikfaktors ($1/K_{f,i}$) ist.

7. Verfahren nach Anspruch 5, **dadurch gekennzeichnet, dass** der Blindleistungs-Statikfaktor ($1/K_{V,i}$) gleich dem reziproken Wert des Spannungs-Statikfaktors ($1/K_{V,i}$) ist.

8. Verfahren nach einem der vorhergehenden Ansprüche, **dadurch gekennzeichnet, dass** die Frequenz ($f_i$) und die Spannung ($V_i$) oder die Wirkleistung ($P_i$) und die Blindleistung ($Q_i$) jeder dezentralisierten Energieerzeugungseinheit (1) des Netzes (14) unter Verwendung des ersten Quotienten ($R_i/|Z_i|$) und des zweiten Quotienten ($X_i/|Z_i|$) für die jeweilige Rückführungsregelung der Parameter ($f_i$, $V_i$ oder $P_i$, $Qi$) gesteuert werden.

9. Verfahren nach Anspruch 2, 3 oder 8, **dadurch gekennzeichnet, dass** die Wirkleistungsdifferenz ($\Delta P_i$) durch eine selektive Funktion (37) gefiltert wird, bevor sie verwendet wird, um ein Produkt ($\Delta f_{i,P}$, $\Delta V_{i,P}$) zu berechnen.

10. Verfahren nach Anspruch 2, 3, 8 oder 9, **dadurch gekennzeichnet, dass** die Blindleistungsdifferenz ($\Delta Q_i$) durch eine selektive Funktion (39) gefiltert wird, bevor sie verwendet wird, um ein Produkt ($\Delta f_{i,Q}$, $\Delta V_{i,Q}$) zu berechnen.

11. Verfahren nach Anspruch 4, 5 oder 8, **dadurch gekennzeichnet, dass** die Frequenzdifferenz ($\Delta f_i$) durch eine selektive Funktion (41) gefiltert wird, bevor sie verwendet wird, um ein Produkt ($\Delta P_{i,f}$, $\Delta Q_{i,f}$) zu berechnen.

12. Verfahren nach Anspruch 4, 5 oder 8, **dadurch gekennzeichnet, dass** die Spannungsdifferenz ($\Delta V_i$) durch eine selektive Funktion (43) gefiltert wird, bevor sie verwendet wird, um ein Produkt ($\Delta P_{i,V}$, $\Delta Q_{i,V}$) zu berechnen.

13. Verwendung des Verfahrens nach einem der Ansprüche 1 bis 12, **dadurch gekennzeichnet, dass** das Verfahren in einer Energieerzeugungseinheit (1) für ein beliebiges Spannungsniveau implementiert wird, insbesondere Ultrahochspannung (Extra High Voltage, EHV), Hochspannung (High Voltage, HV), Mittelspannung (Medium Voltage, MV) oder Niederspannung (Low Voltage, LV).

14. Verwendung des Verfahrens nach einem der vorhergehenden Ansprüche 1 bis 12, **dadurch gekennzeichnet, dass** das Verfahren in einem Energiesystem mit induktiver oder resistiver Natur implementiert ist.

15. Verwendung des Verfahrens nach einem der vorhergehenden Ansprüche 1 bis 12, **dadurch gekennzeichnet, dass** das Verfahren in der Steuerung eines Synchronmotors (12) oder eines Wechselrichters (10) implementiert ist.

16. Verwendung des Verfahrens nach einem der vorhergehenden Ansprüche 1 bis 12, **dadurch gekennzeichnet, dass** das Verfahren in der Steuerung eines Einphasen- oder Dreiphasen-Wechselrichters (10) implementiert ist.

**Revendications**

1. Procédé de régulation active, dans une commande de rétroaction, d'au moins un paramètre de sortie ($f_i$, $V_i$, $P_i$, $Q_i$) d'une unité de production d'énergie décentralisée (1) amenant de l'énergie dans un réseau d'alimentation en énergie (14) ayant une pluralité de telles unités de production d'énergie décentralisées, l'unité de production d'énergie (1) étant couplée au réseau (14) au niveau d'un point noué de réseau (16), **caractérisé en ce que** la résistance réelle ($R_i$), la réactance ($X_i$) et la magnitude ($|Z_i|$) de l'impédance ($Z_i$) de l'unité de production d'énergie (1) au niveau du point noué (16) sont déterminées et un premier quotient ($R_i/|Z_i|$) entre la résistance ($R_i$) et la magnitude d'impédance ($|Z_i|$) et un deuxième quotient ($X_i/|Z_i|$) entre la réactance ($X_i$) et la magnitude d'impédance ($|Z_i|$) sont calculés et utilisés pour la commande de rétroaction de l'au moins un paramètre de sortie ($f_i$, $V_i$, $P_i$, $Q_i$).

2. Procédé selon la revendication 1, **caractérisé en ce que** le paramètre de sortie commandé est la fréquence ($f_i$) de l'unité de production d'énergie (1), et **en ce qu'**il comprend les étapes de :

 - détermination de la puissance active réelle ($P_i$) et de la puissance réactive ($Q_i$) de l'unité de production d'énergie (1) qui sont amenées dans le réseau (14) au niveau du point noué de réseau (16),
- calcul de la différence de puissance active ($\Delta P_i$) entre la puissance active réelle ($P_i$) délivrée par l'unité de production d'énergie (1) et une puissance active de référence donnée ($P_{ref,i}$),
- calcul de la différence de puissance réactive ($\Delta Q_i$) entre la puissance active réelle ($Q_i$) délivrée par l'unité de production d'énergie (1) et une puissance active de référence donnée ($Q_{ref,i}$)
- utilisation du deuxième quotient ($X_i/|Z_i|$) pour calculer un premier produit de fréquence ($\Delta f_{i,P}$) de la différence de puissance active ($\Delta P_i$), du deuxième quotient ($X_i/|Z_i|$) et d'un facteur de dérive de fréquence donné ($K_{f,i}$),
- utilisation du premier quotient ($R_i/|Z_i|$) pour calculer un deuxième produit de fréquence ($\Delta f_{i,Q}$) de la différence de puissance réactive ($AQ_i$), du premier quotient ($R_i/|Z_i|$) et du facteur de dérive de fréquence ($K_{f,i}$), et
- calcul de la somme du premier produit de fréquence ($\Delta f_{i,P}$) et du deuxième produit de fréquence négatif ($\Delta f_{i,Q}$) pour obtenir un terme de correction de fréquence ($\Delta f_{i,P} - \Delta f_{i,Q}$) qui est ajouté à l'erreur ($f_{ref} - f_i$) de la commande de rétroaction de la fréquence ($f_i$).

**3.** Procédé selon la revendication 1 ou 2, **caractérisé en ce que** le paramètre de sortie commandé est la tension ($V_i$) de l'unité de production d'énergie (1), et **en ce qu'**il comprend les étapes de :

- détermination de la puissance active réelle ($P_i$) et de la puissance réactive ($Q_i$) réelle de l'unité de production d'énergie (1) qui sont amenées dans le réseau (14) au niveau du point noué de réseau (16),
- calcul de la différence de puissance active ($\Delta P_i$) entre la puissance active réelle ($P_i$) délivrée par l'unité de production d'énergie (1) et une puissance active de référence donnée ($P_{ref,i}$),
- calcul de la différence de puissance réactive ($\Delta Q_i$) entre la puissance active réelle ($Q_i$) délivrée par l'unité de production d'énergie (1) et une puissance active de référence donnée ($Q_{ref,i}$),
- utilisation du premier quotient ($R_i/|Z_i|$) pour calculer un premier produit de tension ($\Delta V_{i,P}$) de la différence de puissance active ($\Delta P_i$), du premier quotient ($R_i/|Z_i|$) et d'un facteur de dérive de tension ($K_{V,i}$),
- utilisation du deuxième quotient ($X_i/|Z_i|$) pour calculer un deuxième produit de tension ($\Delta V_{i,Q}$) de la différence de puissance réactive ($\Delta Q_i$), du deuxième quotient ($X_i/|Z_i|$) et du facteur de dérive de tension ($K_{V,i}$), et
- calcul de la somme du premier produit de tension ($\Delta V_{i,P}$) et du deuxième produit de tension ($\Delta V_{i,Q}$) pour obtenir un terme de correction de tension ($\Delta V_{i,P} + \Delta V_{i,Q}$) qui est ajouté à l'erreur ($V_{ref,i} - V_i$) de la commande de rétroaction de la tension ($V_i$).

**4.** Procédé selon la revendication 1, 2 ou 3, **caractérisé en ce que** le paramètre contrôlé en sortie est la puissance active ($P_i$) de l'unité de production d'énergie (1), et **en ce qu'**il comprend les étapes de :

- détermination de la fréquence réelle ($f_i$) et de la tension réelle ($V_i$) de l'unité de production d'énergie (1) au niveau du point noué de réseau (16),
- calcul de la différence de fréquence ($\Delta f_i$) entre la fréquence réelle ($f_i$) de l'unité de production d'énergie (1) et une fréquence de référence donnée ($f_{ref}$),
- calcul de la différence de tension ($\Delta V_i$) entre la tension réelle ($V_i$) de l'unité de production d'énergie (1) et une tension de référence donnée ($V_{ref,i}$),
- utilisation du deuxième quotient ($X_i/|Z_i|$) pour calculer un premier produit de puissance active ($\Delta P_{i,f}$) de la différence de fréquence ($\Delta f_i$), du deuxième quotient ($X_i/|Z_i|$) et d'un facteur de dérive de puissance active donné ($1/K_{f,i}$),
- utilisation du premier quotient ($R_i/|Z_i|$) pour calculer un deuxième produit de puissance active ($\Delta P_{i,v}$) de la différence de tension ($\Delta V_i$), du premier quotient ($R_i/|Z_i|$) et du facteur de dérive de puissance active ($1/K_{f,i}$), et
- calcul de la somme du premier produit de puissance active ($\Delta P_{i,f}$) et du deuxième produit de puissance active négatif ($\Delta P_{i,v}$) pour obtenir un terme de correction de puissance active ($\Delta P_{i,f} + \Delta P_{i,v}$) qui est ajouté à l'erreur ($P_{ref,i} - P_i$) de la commande de rétroaction de la puissance active ($P_i$).

**5.** Procédé selon l'une des revendications précédentes, **caractérisé en ce que** le paramètre de sortie commandé est la puissance réactive ($Q_i$) de l'unité de production d'énergie (1), et **en ce qu'**il comprend les étapes de :

- détermination de la fréquence réelle ($f_i$) et de la tension réelle ($V_i$) de l'unité de production d'énergie (1) au niveau du point noué de réseau (16),
- calcul de la différence de fréquence ($\Delta_{fi}$) entre la fréquence réelle ($f_i$) de l'unité de production d'énergie (1) et une fréquence de référence donnée ($f_{ref}$),
- calcul de la différence de tension ($\Delta V_i$) entre la tension réelle ($V_i$) de l'unité de production d'énergie (1) et une tension de référence donnée ($V_{ref,i}$),
- utilisation du premier quotient ($R_i/|Z_i|$) pour calculer un premier produit de puissance réactive ($\Delta Q_{i,f}$) de la

différence de fréquence ($\Delta F_i$), du premier quotient ($R_i/|Z_i|$) et d'un facteur de dérive de puissance réactive donné ($1/K_{v,i}$),

- utilisation du deuxième quotient ($X_i/|Z_i|$) pour calculer un deuxième produit de puissance réactive ($\Delta Q_{i,v}$) de la différence de tension ($\Delta V_i$), du deuxième quotient ($X_i/|Z_i|$) et du facteur de dérive de puissance réactive ($1/K_{v,i}$), et

- calcul de la somme du premier produit de puissance réactive ($\Delta Q_{i,f}$) et du deuxième produit de puissance réactive ($\Delta Q_{i,v}$) pour obtenir un terme de correction de puissance réactive ($\Delta Q_{i,f} + \Delta Q_{i,v}$) qui est ajouté à l'erreur ($Q_{ref,i}$ - $Q_i$) de la commande de rétroaction de la puissance réactive ($Q_i$).

6. Procédé selon la revendication 4, **caractérisé en ce que** le facteur de dérive de puissance active ($1/K_{f,i}$) est égal à l'inverse du facteur de dérive de fréquence ($1/K_{f,i}$).

7. Procédé selon la revendication 5, **caractérisé en ce que** le facteur de dérive de puissance réactive ($1/K_{v,i}$) est égal à l'inverse du facteur de dérive de tension ($1/K_{v,i}$).

8. Procédé selon l'une des revendications précédentes, **caractérisé en ce que** la fréquence ($f_i$) et la tension ($V_i$) ou la puissance active ($P_i$) et la puissance réactive ($Q_i$) de chaque unité de production d'énergie décentralisée (1) du réseau (14) sont commandées par utilisation du premier quotient ($R_i/|Z_i|$) et du deuxième quotient ($X_i/|Z_i|$) pour la commande de rétroaction respective des paramètres ($f_i$, $V_i$, ou $P_i$, $Q_i$).

9. Procédé selon la revendication 2, 3 ou 8, **caractérisé en ce que** la différence de puissance active ($\Delta P_i$) est filtrée par une fonction sélective (37) avant d'être utilisée pour le calcul d'un produit ($\Delta f_{i,P}$, $\Delta V_{i,P}$).

10. Procédé selon la revendication 2, 3, 8 ou 9, **caractérisé en ce que** la différence de puissance réactive ($\Delta Q_i$) est filtrée par une fonction sélective (39) avant d'être utilisée pour le calcul d'un produit ($\Delta f_{i,Q}$, $\Delta V_{i,Q}$).

11. Procédé selon la revendication 4, 5 ou 8, **caractérisé en ce que** la différence de fréquence ($\Delta f_i$) est filtrée par une fonction sélective (41) avant d'être utilisée pour le calcul d'un produit ($\Delta P_{i,f}$, $\Delta Q_{i,f}$).

12. Procédé selon la revendication 4, 5 ou 8, **caractérisé en ce que** la différence de tension ($\Delta V_i$) est filtrée par une fonction sélective (43) avant d'être utilisée pour le calcul d'un produit ($\Delta P_{i,v}$, $\Delta Q_{i,v}$).

13. Utilisation du procédé selon l'une des revendications 1 à 12, **caractérisé en ce que** le procédé est mis en oeuvre dans une unité de production d'énergie (1) pour n'importe quel niveau de tension, en particulier une extra-haute tension (EHT), une haute tension (HT), une moyenne tension (MT) ou une basse tension (BT).

14. Utilisation du procédé selon l'une des revendications 1 à 12, **caractérisée en ce que** le procédé est mis en oeuvre dans un système électrique de nature inductive ou résistive.

15. Utilisation du procédé selon l'une des revendications 1 à 12, **caractérisée en ce que** le procédé est mis en oeuvre dans la commande d'un moteur synchrone (12) ou d'un onduleur (10).

16. Utilisation du procédé selon l'une des revendications 1 à 12, **caractérisée en ce que** le procédé est mis en oeuvre dans la commande d'un onduleur monophasé ou triphasé (10).

```
              ┌─────────────────────────┐
              │   Inverter Feeding Modes │
              │       at Grid Side       │
              └─────────────────────────┘
                           │
           ┌───────────────┴───────────────┐
           ▼                               ▼
┌───────────────────┐           ┌───────────────────┐
│ ECS Driven Feeding│ ～ A      │ Grid Driven Feeding│ ～ B
└───────────────────┘           └───────────────────┘
           │                          │          E
           │                   ┌──────┴──────┐   /
           ▼                   ▼             ▼
    ┌──────────────┐    ┌──────────────┐  ┌──────────────────┐
    │ Grid Parallel│～C │ Grid Forming │～D│ Grid Supporting  │
    └──────────────┘    └──────────────┘  └──────────────────┘
```

Fig. 1

Fig. 2

Fig. 3

Fig. 4

**Fig. 5**

EP 2 792 042 B1

Fig. 6

Fig. 7

EP 2 792 042 B1

To other bus

Bus $i$

$P_i + jQ_i$

16

$V_i = |V_i| \angle \delta_i$

Load

18

$P_{L,i} + jQ_{L,i}$

Generator

1

$P_{G,i} + jQ_{G,i}$

**Fig. 8**

33

Fig. 9

(a)

(b)

Fig. 10

Fig. 11

Fig. 12

**Fig. 13**

Fig. 14

EP 2 792 042 B1

Fig. 15

Fig. 16

(a)

(b)

**Fig. 17**

**Fig. 18**

EP 2 792 042 B1

$$\tan(\varphi) = \frac{\delta_2}{V}$$

Fig. 19

**Fig. 21**

Fig. 22

Local Grid

14

Line 26

38  Impedance Measurement

16

36

$f_i$

$f_{ref}$   40

$V_{ref,i}$   $V_i$

$\Delta f_i$   $\Delta V_i$   $\Delta f_i$   $\Delta V_i$

$\dfrac{X_i}{|Z_i|}$   $\dfrac{R_i}{|Z_i|}$   $\dfrac{R_i}{|Z_i|}$   $\dfrac{X_i}{|Z_i|}$

$1/Kf_i$   $1/Kf_i$   $1/Kv_i$   $1/Kv_i$

$\Delta P_{i,f}$   $\Delta P_{i,V}$   $\Delta Q_{i,f}$   $\Delta Q_{i,V}$

$P_i$   $Q_i$

Reference Value  $P_{ref}$

Control Unit   31

33   $G_i$  3~

$\omega_i$

35

Control Unit   30

$Q_{ref}$ Reference Value

1

12

Fig. 23

Fig. 24

Fig. 25

Fig. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 10140783 A

### Non-patent literature cited in the description

- **K. DE BRABANDERE ; B. BOLSENS ; J. VAN DEN KEYBUS ; A. WOYTE ; J. DRIESEN ; R. BELMANS.** A Voltage and Frequency Droop Control Method for Parallel Inverters. *IEEE Transactions on Power Electronic,* 2007, vol. 22 (4), 1107-1115
- **E. ORTJOHANN ; A. MOHD ; N. HAMSIC ; D. MORTON ; O. OMARI.** Advanced Control Strategy for Three-Phase Grid Inverters with Unbalanced Loads for PV/Hybrid Power Systems. *21th European PV Solar Energy Conference,* 2006
- **O. OMARI.** Conceptual Development of a General Supply Philosophy for Isolated Electrical Power Systems. South Westphalia University of Applied Sciences, 2005
- Development of Modular Grid Architecture for Decentralized Generators in Electrical Power Supply System with Flexible Power Electronics. **A. MOHD.** Dissertation, Joint-PhD Program between The University of Bolton. South Westphalia University of Applied Sciences - Soest, January 2010
- Operation Handbook - Introduction. *UCTE,* 24 June 2004
- Operational Handbook - Policy 1: Load-Frequency Control. *UCTE,* 19 March 2009
- **BERND VOGES.** Schutzmaßnahmen gegen Selbstlauf dezentraler Wandlersysteme in elektrischen Energieversorgungsnetzen. *Dissertation Universität Paderborn,* 1997, 43
- **DETLEF SCHULZ.** Netzruckwirkungen - Theorie, Simulation, Messung und Bewertung. VDE-Verlag, 2004, vol. 1, 65
- **J. GRAINGER ; W. STEVENSON.** Power System Analysis. McGraw-Hill Series in Electrical and Computer Engineering